# EUROPEAN PATENT APPLICATION

(11) **EP 4 657 925 A1**
(43) Date of publication of application: **03.12.2025**
(21) Application number: 24756316.6
(22) Date of filing: 08.02.2024
(51) Int. Cl.: H04W 36/00

(54) **CELL CONFIGURATION METHOD AND DEVICE**

(30) Priority: 17.02.2023 CN 202310155782
(71) Applicant: Huawei Technologies Co., Ltd., Shenzhen, Guangdong 518129 (CN)
(72) Inventor: WANG, Fanfan, Shenzhen, Guangdong 518129 (CN); HU, Xingxing, Shenzhen, Guangdong 518129 (CN); SHI, Yulong, Shenzhen, Guangdong 518129 (CN); LI, Jiaojiao, Shenzhen, Guangdong 518129 (CN)
(74) Representative: Pfenning, Meinig & Partner mbB
(86) International application number: PCT/CN2024/077027
(87) International publication number: WO 2024/169944

(57) **Abstract**

This application provides a cell configuration method and a device. The method includes: A master node determines M candidate primary secondary cells, where M is a positive integer; the master node obtains first reference configuration information; the master node obtains RRC messages corresponding to N candidate primary secondary cells, where N is a positive integer, the N candidate primary secondary cells are included in the M candidate primary secondary cells, an RRC message of a first candidate primary secondary cell in the N candidate primary secondary cells includes SCG configuration information of the first candidate primary secondary cell, and the SCG configuration information of the first candidate primary secondary cell is a delta configuration based on the first reference configuration information; and the master node delivers, to a terminal, second reference configuration information and the RRC messages corresponding to the N candidate primary secondary cells, where the second reference configuration information includes the first reference configuration information. In this application, overheads of RRC signaling transmission and terminal storage are reduced in continuous CPAC.

## Description

This application claims priority to Chinese Patent Application No. 202310155782.5, filed with the China National Intellectual Property Administration on February 17, 2023 and entitled "CELL CONFIGURATION METHOD AND DEVICE", which is incorporated herein by reference in its entirety.

### TECHNICAL FIELD

This application relates to communication technologies, and in particular, to a cell configuration method and a device.

### BACKGROUND

A conditional primary secondary cell addition/change (CPAC) mechanism is introduced in Rel-17 (the 3rd version of the global 5G standard: Rel-17). A corresponding trigger node (a master node/secondary node) may prepare a plurality of candidate primary secondary cells in advance, and a network side sends a CPAC configuration to a terminal, where the CPAC configuration includes candidate cell information, a measurement configuration, and a handover trigger condition.

After receiving the CAPC configuration, if the terminal finds that signal quality of a candidate cell meets the handover trigger condition, the terminal uses the candidate cell as a target cell and performs random access to the target cell, to perform a primary secondary cell addition or change procedure. During basic primary secondary cell addition/change, the network side indicates one target candidate cell. During conditional primary secondary cell addition/change, the network side indicates a plurality of candidate cells, and the terminal obtains, through evaluation, a candidate cell that meets a condition as a target cell, and initiates access to the target cell. After primary secondary cell addition/change is successfully performed, the terminal releases the stored CPAC configuration.

In a CPC procedure triggered by an MN and a CPA procedure in Rel-17, the master node does not provide an SCG configuration for a candidate secondary node, and the candidate secondary node provides an SCG full configuration corresponding to the candidate primary secondary cell for the master node. The master node delivers the full configuration to the terminal, so that the terminal accesses the candidate primary secondary cell based on the full configuration. However, during continuous CPAC, still using the full configuration of the existing procedure may cause huge overheads of signaling transmission and terminal storage.

### SUMMARY

This application provides a cell configuration method and a device, to resolve a problem that overheads of signaling transmission and terminal storage are extremely high during current continuous CPAC.

According to a first aspect, this application provides a cell configuration method, including:

A master node determines M candidate primary secondary cells, where M is a positive integer;
the master node obtains first reference configuration information;
the master node obtains RRC messages corresponding to N candidate primary secondary cells, where N is a positive integer, the N candidate primary secondary cells are included in the M candidate primary secondary cells, an RRC message of a first candidate primary secondary cell in the N candidate primary secondary cells includes SCG configuration information of the first candidate primary secondary cell, and the SCG configuration information of the first candidate primary secondary cell is a delta configuration based on the first reference configuration information; and
the master node delivers, to a terminal, second reference configuration information and the RRC messages corresponding to the N candidate primary secondary cells, where the second reference configuration information includes the first reference configuration information.

In this embodiment, the M candidate primary secondary cells are determined, and the second reference configuration information and the RRC messages corresponding to the N candidate primary secondary cells are delivered to the terminal. The terminal determines, based on the second reference configuration information and the RRC message of the first candidate primary secondary cell, configuration information used to access the first candidate primary secondary cell in a delta configuration manner of the RRC message of the first candidate primary secondary cell. Therefore, during continuous CPAC, overheads of RRC signaling transmission and terminal storage are reduced in the delta configuration manner.

In addition, the terminal applies the RRC message of the first candidate primary secondary cell in the delta configuration manner, so that after the terminal is handed over from a current primary secondary cell to the first candidate primary secondary cell, the terminal only needs to perform PDCP recovery if an intra-station primary secondary cell change is performed, and the terminal only needs to perform PDCP reestablishment if an inter-station primary secondary cell change is performed.

Therefore, compared with a case in which a current terminal is handed over from a current primary secondary cell to a first candidate cell, because an RRC message of a first candidate primary secondary cell in a full configuration form needs to be used, a PDCP release and re-add method needs to be performed, this embodiment reduces a user plane data interruption time, and avoids a data packet loss.

In a possible implementation, that the master node obtains the first reference configuration information includes:

The master node receives the first reference configuration information from a first candidate secondary node, where the first candidate secondary node is configured to manage one or more of the M candidate primary secondary cells.

In a possible implementation, receiving the first reference configuration information from the first candidate secondary node includes: in response to a first message sent to the first candidate secondary node, receiving the first reference configuration information from the first candidate secondary node, where the first message is used to request the first reference configuration information.

The first message is sent to the first candidate secondary node, to implement targeted triggering of the first candidate secondary node and obtain the first reference configuration information of the first candidate secondary node. This helps the master node obtain the first reference configuration information based on a requirement.

In a possible implementation, the master node receives one or more SCG configurations from a first candidate secondary node, where the first candidate secondary node is configured to manage one or more of the M candidate primary secondary cells, the one or more SCG configurations are full configurations, and M is a positive integer; and
the master node determines the first reference configuration information based on the one or more SCG configurations.

By receiving the one or more SCG configurations and determining the first reference configuration information based on the one or more SCG configurations, the master node may determine, based on the obtained SCG configuration, the first reference configuration information required by the master node, so that an application scope is extended.

In a possible implementation, receiving the one or more SCG configurations from the first candidate secondary node includes: in response to a secondary node addition request message sent to the first candidate secondary node, receiving the one or more SCG configurations from the first candidate secondary node, where the secondary node addition request message is used to request the one or more SCG configurations, and the one or more SCG configurations are SCG configurations corresponding to one or more candidate primary secondary cells allocated by the first candidate secondary node to UE.

Technical effect of sending the secondary node addition request message to the first candidate secondary node and obtaining the one or more SCG configurations of the first candidate secondary node helps the master node determine the first reference configuration information based on the SCG configuration obtained in an existing secondary node addition procedure.

In a possible implementation, that the master node obtains the first reference configuration information includes:

The master node receives the first reference configuration information from a source secondary node, where the source secondary node is a secondary node corresponding to a primary secondary cell currently accessed by the terminal.

In a possible implementation, receiving the first reference configuration information from the source secondary node includes: in response to a second message sent to the source secondary node, receiving the first reference configuration information from the source secondary node, where the second message is used to request the first reference configuration information.

In a possible implementation, that the master node obtains the first reference configuration information includes:

The master node receives an SCG configuration from a source secondary node, where the source secondary node is a secondary node corresponding to a primary secondary cell currently accessed by the terminal, and the SCG configuration of the source secondary node may be an SCG full configuration configured for the terminal; and
the master node determines the first reference configuration information based on the SCG configuration from the source secondary node.

In a possible implementation, receiving the SCG configuration from the source secondary node includes: in response to a third message sent to the source secondary node, receiving the SCG configuration from the source secondary node, where the third message is used to request a current SCG configuration of the terminal.

The first reference configuration information is obtained and provided for the candidate secondary node, so that the candidate secondary node may prepare the RRC message of the candidate PSCell based on the first reference configuration information. In this way, the RRC message of the candidate PSCell is delivered to the terminal in a delta configuration form, and overheads of RRC signaling transmission and storage are further reduced.

According to a second aspect, this application provides a cell configuration method, including:

A master node receives K pieces of first reference configuration information and N RRC messages from K candidate secondary nodes, where K is a positive integer, N is a positive integer, one candidate secondary node corresponds to one piece of first reference configuration information and one or more RRC messages, an RRC message of a first candidate secondary node in the K candidate secondary nodes includes SCG configuration information of a first candidate primary secondary cell, and the SCG configuration information of the first candidate primary secondary cell is a delta configuration based on first reference configuration information of the first candidate secondary node; and
the master node delivers second reference configuration information and RRC messages of N candidate primary secondary cells to a terminal, where the second reference configuration information includes the K pieces of first reference configuration information.

In this embodiment, the K pieces of first reference configuration information and the N RRC messages are received from the K candidate secondary nodes, to obtain the first reference configuration information and the RRC message of each candidate secondary node.

The second reference configuration information and the RRC messages corresponding to the N candidate primary secondary cells are delivered to the terminal.

First indication information is delivered to the terminal, where the first indication information indicates the K pieces of first reference configuration information and the RRC messages of the N candidate primary secondary cells, or a correspondence between the K pieces of first reference configuration information and the N candidate primary secondary cells.

In this way, when the terminal accesses the first candidate primary secondary cell, if the first reference configuration information corresponding to the first candidate primary secondary cell is the same as the first reference configuration information that is currently applied, the terminal determines that a change from the current primary secondary cell to the first candidate primary secondary cell is an intra-station primary secondary cell change, and the terminal only needs to perform PDCP recovery; or if the first reference configuration information corresponding to the first candidate primary secondary cell is different from the first reference configuration information that is currently applied, the terminal determines that a change from the current primary secondary cell to the first candidate primary secondary cell is an inter-station primary secondary cell change, and the terminal needs to perform PDCP reestablishment.

Therefore, compared with a current method in which PDCP release and re-addition need to be performed because a full configuration needs to be used when a terminal is handed over from a current primary secondary cell to a first candidate cell, in this embodiment, only PDCP recovery or PDCP re-establishment needs to be performed, so that overheads of RRC signaling and storage are reduced. In addition, compared with PDCP release and re-addition mentioned in the conventional technology, in this embodiment, the terminal accesses the first candidate primary secondary cell based on PDCP recovery or PDCP re-establishment, so that a user plane data interruption time is reduced, and a data packet loss is avoided.

In a possible implementation, receiving the K pieces of first reference configuration information and the N RRC messages from the K candidate secondary nodes includes: responding to secondary node addition request information sent to L candidate secondary nodes separately, where the K candidate secondary nodes are included in the L candidate secondary nodes.

According to a third aspect, this application provides a cell configuration method, including:

A terminal receives, from a master node, second reference configuration information and RRC messages corresponding to N candidate primary secondary cells, where N is a positive integer, an RRC message of a first candidate primary secondary cell in the N candidate primary secondary cells includes SCG configuration information of the first candidate primary secondary cell, the SCG configuration information of the first candidate primary secondary cell is a delta configuration based on first reference configuration information, and the second reference configuration information includes the first reference configuration information; and
the terminal determines third configuration information based on the second reference configuration information and the RRC message of the first candidate primary secondary cell, and the terminal accesses the first candidate primary secondary cell based on the third configuration information.

In a possible implementation, that the terminal determines the third configuration information based on the second reference configuration information and the RRC message of the first candidate primary secondary cell, and the terminal accesses the first candidate primary secondary cell based on the third configuration information includes:
when the terminal determines that the first candidate primary secondary cell meets a corresponding execution trigger condition, the terminal accesses the first candidate primary secondary cell based on the second reference configuration information and the RRC message of the first candidate primary secondary cell.

According to a fourth aspect, this application provides a cell configuration method, including:

A terminal receives, from a master node, second reference configuration information and RRC messages of N candidate primary secondary cells, where the second reference configuration information includes K pieces of first reference configuration information, N is a positive integer, K is a positive integer, one candidate secondary node corresponds to one piece of first reference configuration information and one or more RRC messages, an RRC message of a first candidate primary secondary cell in the N candidate primary secondary cells includes SCG configuration information of the first candidate primary secondary cell, and the SCG configuration information of the first candidate primary secondary cell is a delta configuration based on first reference configuration information of a first candidate secondary node; and
the terminal determines third configuration information based on the second reference configuration information and the RRC message of the first candidate primary secondary cell, and the terminal accesses the first candidate primary secondary cell based on the third configuration information.

In a possible implementation, that the terminal determines the third configuration information based on the second reference configuration information and the RRC message of the first candidate primary secondary cell includes:
when the terminal determines that the first candidate primary secondary cell meets a corresponding execution trigger condition, the terminal determines the third configuration information based on the first reference configuration information that is in the second reference configuration message and that corresponds to the first candidate primary secondary cell and the RRC message of the first candidate primary secondary cell.

In a possible implementation, that the terminal determines, based on the first reference configuration information that is in the second reference configuration message and that corresponds to the first candidate primary secondary cell, an intra-station primary secondary cell change or an inter-station primary secondary cell change includes:
if the terminal determines that the first reference configuration information corresponding to the first candidate primary secondary cell is the same as first reference configuration information applied by the terminal, the terminal determines that the intra-station primary secondary cell change is performed; or
if the terminal determines that the first reference configuration information corresponding to the first candidate primary secondary cell is different from first reference configuration information applied by the terminal, the terminal determines that the inter-station primary secondary cell change is performed.

According to a fifth aspect, this application provides a cell configuration method, including:

K candidate secondary nodes send K pieces of first reference configuration information and N RRC message to a master node, where K is a positive integer, N is a positive integer, one candidate secondary node corresponds to one piece of first reference configuration information and one or more RRC messages, an RRC message of a first candidate secondary node in the K candidate secondary nodes includes SCG configuration information of a first candidate primary secondary cell, and the SCG configuration information of the first candidate primary secondary cell is a delta configuration based on first reference configuration information of the first candidate secondary node.

In a possible implementation, sending the K pieces of first reference configuration information and the N RRC messages to the master node includes: responding to secondary node addition information received from the master node.

According to a sixth aspect, this application provides a master node, including a first receiver and a first transmitter, where
the first receiver is configured to determine M candidate primary secondary cells, where M is a positive integer;
the first receiver is further configured to obtain first reference configuration information;
the first receiver is further configured to obtain RRC messages corresponding to N candidate primary secondary cells, where N is a positive integer, the N candidate primary secondary cells are included in the M candidate primary secondary cells, an RRC message of a first candidate primary secondary cell in the N candidate primary secondary cells includes SCG configuration information of the first candidate primary secondary cell, and the SCG configuration information of the first candidate primary secondary cell is a delta configuration based on the first reference configuration information; and
the first transmitter is configured to deliver, to a terminal, second reference configuration information and the RRC messages corresponding to the N candidate primary secondary cells, where the second reference configuration information includes the first reference configuration information.

In a possible implementation, the first receiver is further configured to receive the first reference configuration information from a first candidate secondary node, where the first candidate secondary node is configured to manage one or more of the M candidate primary secondary cells.

In a possible implementation, the first receiver is further configured to receive the first reference configuration information from the first candidate secondary node in response to a first message sent to the first candidate secondary node, where the first message is used to request the first reference configuration information.

In a possible implementation, the first receiver is further configured to receive one or more SCG configurations from a first candidate secondary node, where the first candidate secondary node is configured to manage one or more of the M candidate primary secondary cells, and the one or more SCG configurations are full configurations, and M is a positive integer; and
the first receiver is further configured to determine the first reference configuration information based on the one or more SCG configurations.

In a possible implementation, the first receiver is further configured to receive the one or more SCG configurations from the first candidate secondary node in response to a secondary node addition request message sent to the first candidate secondary node, where the secondary node addition request message is used to request the one or more SCG configurations.

In a possible implementation, the first receiver is further configured to receive the first reference configuration information from a source secondary node, where the source secondary node is a secondary node corresponding to a primary secondary cell currently accessed by the terminal.

In a possible implementation, the first receiver is further configured to receive the first reference configuration information from the source secondary node in response to a second message sent to the source secondary node, where the second message is used to request the first reference configuration information.

In a possible implementation, the first receiver is further configured to receive an SCG configuration from a source secondary node, where the source secondary node is a secondary node corresponding to a primary secondary cell currently accessed by the terminal, and the SCG configuration of the source secondary node is a full configuration; and
the first receiver is further configured to determine the first reference configuration information based on the SCG configuration from the source secondary node.

In a possible implementation, the first receiver is further configured to receive an SCG configuration from a source secondary node in response to a third message sent to the source secondary node, where the third message is used to request a current SCG configuration of the terminal.

According to a seventh aspect, this application provides a master node, including a second receiver and a second transmitter, where
the second receiver is configured to receive K pieces of first reference configuration information and N RRC messages from K candidate secondary nodes, where K is a positive integer, N is a positive integer, one candidate secondary node corresponds to one piece of first reference configuration information and one or more RRC messages, an RRC message of a first candidate secondary node in the K candidate secondary nodes includes SCG configuration information of a first candidate primary secondary cell, and the SCG configuration information of the first candidate primary secondary cell is a delta configuration based on first reference configuration information of the first candidate secondary node; and
the second transmitter is configured to deliver second reference configuration information and the RRC messages of the N candidate primary secondary cells to a terminal, where the second reference configuration information includes the K pieces of first reference configuration information.

In a possible implementation, the second receiver is further configured to receive the K pieces of first reference configuration information and the N RRC messages from the K candidate secondary nodes in response to secondary node addition request information sent to L candidate secondary nodes separately, where the K candidate secondary nodes are included in the L candidate secondary nodes.

According to an eighth aspect, this application provides a terminal, including a third receiver and a third transmitter, where
the third receiver is configured to receive, from a master node, second reference configuration information and RRC messages corresponding to N candidate primary secondary cells, where N is a positive integer, an RRC message of a first candidate primary secondary cell in the N candidate primary secondary cells includes SCG configuration information of the first candidate primary secondary cell, the SCG configuration information of the first candidate primary secondary cell is a delta configuration based on first reference configuration information, and the second reference configuration information includes the first reference configuration information; and
the third transmitter is further configured to: when it is determined that the first candidate primary secondary cell meets a corresponding execution trigger condition, access the first candidate primary secondary cell based on the first reference configuration information and the RRC message of the first candidate primary secondary cell.

In a possible implementation, the third transmitter is further configured to: when it is determined that the first candidate primary secondary cell meets a corresponding execution trigger condition, the terminal accesses the first candidate primary secondary cell based on the first reference configuration information and the RRC message of the first candidate primary secondary cell.

According to a ninth aspect, this application provides a terminal, including a fourth receiver and a fourth transmitter, where
the fourth receiver is configured to receive, from a master node, second reference configuration information and RRC messages of N candidate primary secondary cells, where the second reference configuration information includes K pieces of first reference configuration information, N is a positive integer, K is a positive integer, one candidate secondary node corresponds to one piece of first reference configuration information and one or more RRC messages, an RRC message of a first candidate primary secondary cell in the N candidate primary secondary cells includes SCG configuration information of the first candidate primary secondary cell, and the SCG configuration information of the first candidate primary secondary cell is a delta configuration based on first reference configuration information of the first candidate secondary node; and
the fourth transmitter is configured to determine third configuration information based on the second reference configuration information and the RRC message of the first candidate primary secondary cell, and the fourth transmitter is further configured to access the first candidate primary secondary cell based on the third configuration information.

In a possible implementation, the fourth transmitter is further configured to: when it is determined that the first candidate primary secondary cell meets a corresponding execution trigger condition, determine, by the terminal, the third configuration information based on the first reference configuration information that is in the second reference configuration message and that corresponds to the first candidate primary secondary cell and the RRC message of the first candidate primary secondary cell.

In a possible implementation, the fourth transmitter is further configured to: if it is determined that the first reference configuration information corresponding to the first candidate primary secondary cell is the same as first reference configuration information applied by the terminal, determine that an intra-station primary secondary cell change is performed; and
the fourth transmitter is further configured to: if it is determined that the first reference configuration information corresponding to the first candidate primary secondary cell is different from first reference configuration information applied by the terminal, determine that an inter-station primary secondary cell change is performed.

According to a tenth aspect, this application provides a secondary node, including a fifth transmitter, where
the fifth transmitter is configured to send K pieces of first reference configuration information and N RRC messages to a master node, where K is a positive integer, L is a positive integer, one candidate secondary node corresponds to one piece of first reference configuration information and one or more RRC messages, an RRC message of a first candidate secondary node in the K candidate secondary nodes includes SCG configuration information of a first candidate primary secondary cell, and the SCG configuration information of the first candidate primary secondary cell is a delta configuration based on first reference configuration information of the first candidate secondary node.

In a possible implementation, the fifth transmitter is further configured to respond to secondary node addition information received from the master node.

According to an eleventh aspect, this application provides a master node, including at least one processing element or chip configured to perform any one of the implementations of the first aspect and the second aspect.

According to a twelfth aspect, this application provides a computer program product, including program code. When running the program code, a computer is configured to perform any one of the implementations of the first aspect and the second aspect.

According to a thirteenth aspect, this application provides a computer-readable storage medium, including the program in the twelfth aspect.

According to a fourteenth aspect, this application provides a terminal, including at least one processing element or chip configured to perform any one of the implementations of the third aspect and the fourth aspect.

According to a fifteenth aspect, this application provides a computer program product, including program code. When running the program code, a computer is configured to perform any one of the implementations of the third aspect and the fourth aspect.

According to a sixteenth aspect, this application provides a computer-readable storage medium, including the program in the fifteenth aspect.

According to a seventeenth aspect, this application provides a secondary node, including at least one processing element or chip configured to perform the fifth aspect.

According to an eighteenth aspect, this application provides a computer program product, including program code. When running the program code, a computer is configured to perform the implementations of the fifth aspect.

According to a nineteenth aspect, this application provides a computer-readable storage medium, including the program in the eighteenth aspect.

According to a twentieth aspect, a communication system is provided. The system includes the master node in the first aspect, the second aspect, or any one of the possible implementations of the first aspect and the second aspect. The system further includes the terminal in the third aspect, the fourth aspect, or any one of the possible implementations of the third aspect and the fourth aspect. The system further includes at least one secondary node in the fifth aspect or any one of the possible implementations of the fifth aspect.

This application provides a cell configuration method and a device. Second reference configuration information and RRC messages corresponding to N candidate primary secondary cells are delivered to a terminal, so that the terminal can determine, based on the second reference configuration information and an RRC message of a delta configuration of a first candidate primary secondary cell, third configuration information used to access the first candidate primary secondary cell, to implement technical effect of performing CPAC based on the delta configuration. Therefore, during continuous CPAC, overheads of RRC signaling transmission and terminal storage are reduced in the delta configuration manner.

### BRIEF DESCRIPTION OF DRAWINGS

FIG. 1 is a diagram of an application scenario according to an embodiment of this application;
FIG. 2 is a diagram of a networking architecture according to an embodiment of this application;
FIG. 3 is a diagram of an architecture of an MR-DC control plane according to an embodiment of this application;
FIG. 4 is a diagram of protocol stacks of an MCG bearer, an SCG, and a split bearer on a network side in EN-DC according to an embodiment of this application;
FIG. 5 is a diagram of protocol stacks of an MCG bearer, an SCG, and a split bearer on a network side in NGEN-DC/NE-DC/NR-DC according to an embodiment of this application;
FIG. 6A and FIG. 6B are a signaling diagram of a conditional primary secondary cell addition/change mechanism according to this application;
FIG. 7A to FIG. 7D are a signaling diagram of a cell configuration method according to an embodiment of this application;
FIG. 8 is a signaling diagram of another cell configuration method according to an embodiment of this application;
FIG. 9 is a diagram of a structure of a master node according to an embodiment of this application;
FIG. 10 is a diagram of a structure of another master node according to an embodiment of this application;
FIG. 11 is a diagram of a structure of a terminal according to an embodiment of this application;
FIG. 12 is a diagram of a structure of another terminal according to an embodiment of this application;
FIG. 13 is a diagram of a structure of a secondary node according to an embodiment of this application;
FIG. 14 is a diagram of a structure of a master node according to an embodiment of this application;
FIG. 15 is a diagram of a structure of a master node according to an embodiment of this application;
FIG. 16 is a diagram of a structure of a terminal according to an embodiment of this application; and
FIG. 17 is a diagram of a structure of a terminal according to an embodiment of this application; and
FIG. 18 is a diagram of a structure of a secondary node according to an embodiment of this application.

### DESCRIPTION OF EMBODIMENTS

Embodiments of this application are applied to a 4G (4th Generation) system, a 5G (5th Generation) system, an NTN (non-terrestrial network) system, or a future mobile communication system, or may be applied to another communication system, for example, a wireless local area network (wireless local area network, WLAN) system, a global system of mobile communication (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and new radio (new radio, NR).

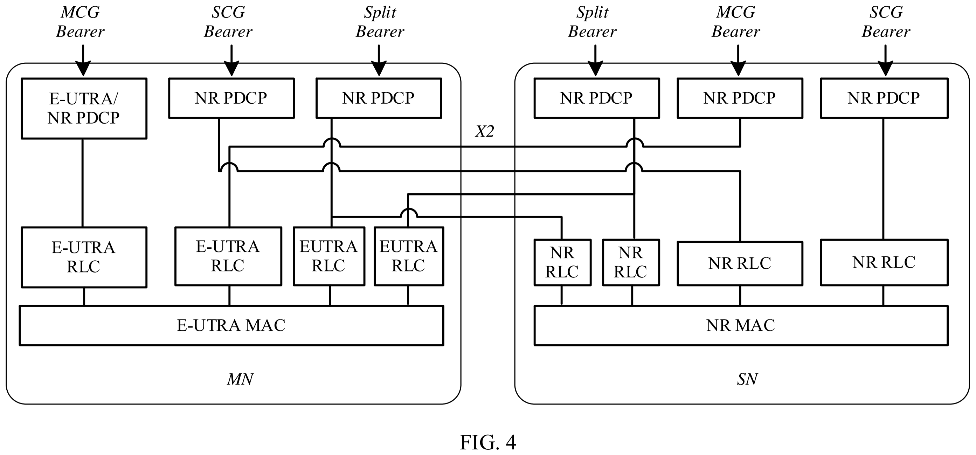

The following describes some terms in this application, to facilitate understanding of a person skilled in the art. It should be noted that when solutions in embodiments of this application are applied to a 5G system, an existing system, or another system that may appear in the future, names of a network device, a core network device, an application network element, and a terminal device may change, but this does not affect implementation of the solutions in embodiments of this application.
(1) A terminal is also referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), and the like. The terminal may include a plurality of SIMs.
(2) An access network device is a radio access network (radio access network, RAN) node (or device) that connects a terminal to a wireless network, and may also be referred to as a base station. Currently, examples of some RAN nodes are as follows: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, an access network device may include a central unit (central unit, CU) node, a distributed unit (distributed unit, DU) node, or a RAN device including a CU node and a DU node. The RAN device including the CU node and the DU node separates protocol layers of a gNB in an NR system. Functions of some protocol layers are controlled by the CU in a centralized manner. Functions of some or all remaining protocol layers are distributed in the DU, and the CU controls the DU in a centralized manner. In an implementation (FIG. 4), a radio resource control (radio Resource Control, RRC) layer, a PDCP layer, and a service data adaptation protocol (service data adaptation protocol, SDAP) layer in a protocol stack are deployed in the CU. A radio link control (radio link control, RLC) layer, a media access control (media access control, MAC) layer, and a physical layer (physical layer, PHY) in the protocol stack are deployed in the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. In other words, there may be another function division manner between the CU and the DU. Details are not described in embodiments of this application. Functions of the CU may be implemented by one entity or different entities. For example, the functions of the CU may be further divided. For example, a control plane (CP) and a user plane (UP) are separated, that is, a CU control plane (CU-CP) and a CU user plane (CU-UP) are separated. For example, the CU-CP and the CU-UP may be implemented by different functional entities. The CU-CP and the CU-UP may be coupled to the DU to jointly implement functions of a base station. The control plane CU-CP of the CU further includes a further division architecture. In other words, an existing CU-CP is further divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer). In a possible manner, the CU-CP is responsible for control plane functions, which mainly include RRC and PDCP-C. The PDCP-C is mainly responsible for data encryption and decryption, integrity protection, data transmission, and the like on the control plane. The CU-UP is responsible for a user plane function, and mainly includes an SDAP and PDCP-U. The SDAP is mainly responsible for processing data of a core network and mapping a data flow (flow) to a bearer. The PDCP-U is mainly responsible for data plane encryption and decryption, integrity protection, header compression, sequence number maintenance, data transmission, and the like. The CU-CP and the CU-UP are connected through an El interface. The CU-CP indicates that the gNB is connected to the core network through an Ng interface, and is connected to the DU through F1-C (control plane). The CU-UP is connected to the DU through F1-U (user plane). Certainly, in another possible implementation, the PDCP-C is alternatively in the CU-UP.
(3) A core network device is a device on a core network (core network, CN) that provides service support for a terminal. Currently, some examples of the core network device are as follows: an access and mobility management function (access and mobility management function, AMF) entity, a session management function (session management function, SMF) entity, and a user plane function (user plane function, UPF) entity, which are not enumerated herein. The AMF entity may be responsible for access management and mobility management of the terminal. The SMF entity may be responsible for session management, for example, session establishment of a user. The UPF entity may be a functional entity on a user plane, and is mainly responsible for a connection to an external network. It should be noted that, an entity in this application may also be referred to as a network element or a functional entity. For example, the AMF entity may also be referred to as an AMF network element or an AMF functional entity. For another example, the SMF entity may also be referred to as an SMF network element or an SMF functional entity.
(4) "A plurality of" refers to two or more, and other quantifiers are similar to this. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.
(5) "Correspondence" may refer to an association relationship or a binding relationship, and that A corresponds to B refers to an association relationship or a binding relationship between A and B.

Table 1 shows Chinese expressions/Chinese terms of some English acronyms and abbreviations and full English expressions/standard English terms in this application.

**Table 1**

| Chinese expression/Chinese term | Full English expression/Standard English term | English acronyms and abbreviations |
|---|---|---|
| 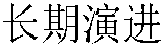 | Long Term Evolution | LTE |
| 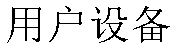 | User Equipment | UE |
| 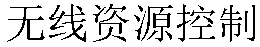 | Radio Resource Control | RRC |
| 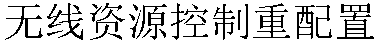 | Radio Resource Control Reconfiguration | RRCReconfiguration |
| 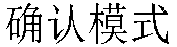 | Acknowledged Mode | AM |
| 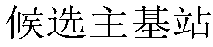 | Candidate Master Node | C-MN |
| 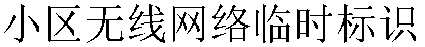 | Cell Radio Network Temporary Identifier | C-RNTI |
| 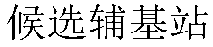 | Candidate Secondary Node | C-SN |
| 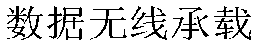 | Data Radio Bearer | DRB |
| 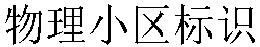 | Physical Cell Identifier | PCI |
| 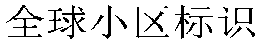 | Cell Global Identifier | CGI |
| 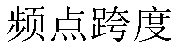 | Frequency Range | FR |
| 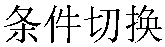 | Conditional Handover | CHO |
| 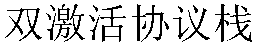 | Dual Active Protocol Stack | DAPS |
| 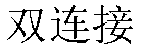 | Dual Connectivity | DC |
| 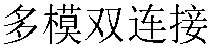 | Multi-Radio dual connectivity | MR-DC |
| 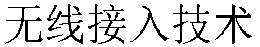 | Radio Access Technology | RAT |
| 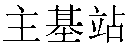 | Master Node | MN |
| 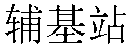 | Secondary Node | SN |
| 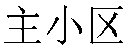 | Primary Cell | PCell |
| 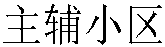 | Primary Secondary Cell | PSCell |
| 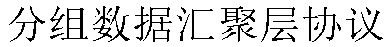 | Packet Data Convergence Protocol | PDCP |
| 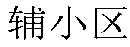 | Secondary Cell | SCell |
| 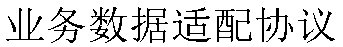 | Service Data Adaptation Protocol | SDAP |
| 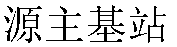 | Source Master Node | S-MN |
| 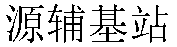 | Source Secondary Node | S-SN |
| 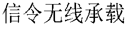 | Signaling Radio Bearer | SRB |
| 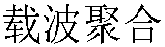 | Carrier Aggregation | CA |
| 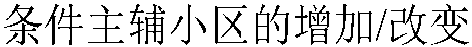 | Conditional PSCell Addition/Change | CPAC |
| 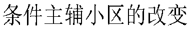 | Conditional PSCell Change | CPC |
| 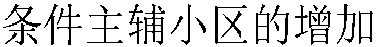 | Conditional PSCell Addition | CPA |
| 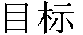 SN | Target-SN | T-SN |
| 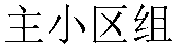 | Master Cell Group | MCG |
| 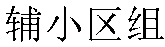 | Secondary Cell Group | SCG |
| 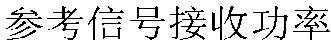 | Reference Signal Received Power | RSRP |
| 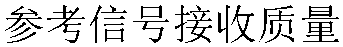 | Reference Signal Received Quality | RSRQ |
| 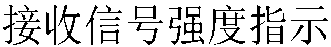 | Received Signal Strength Indicator | RSSI |
| 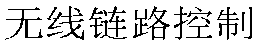 | Radio Link Control | RLC |
| 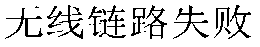 | Radio Link Failure | RLF |
| 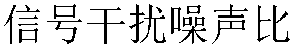 | Signal to interference plus noise ratio | SINR |
| 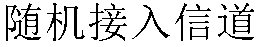 | Random Access Channel | RACH |
| 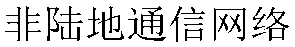 | Non-Terrestrial Network | NTN |
| 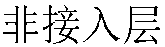 | Non-access Stratum | NAS |

It should be noted that nouns or terms in embodiments of this application may be referred to each other, and are not described again.

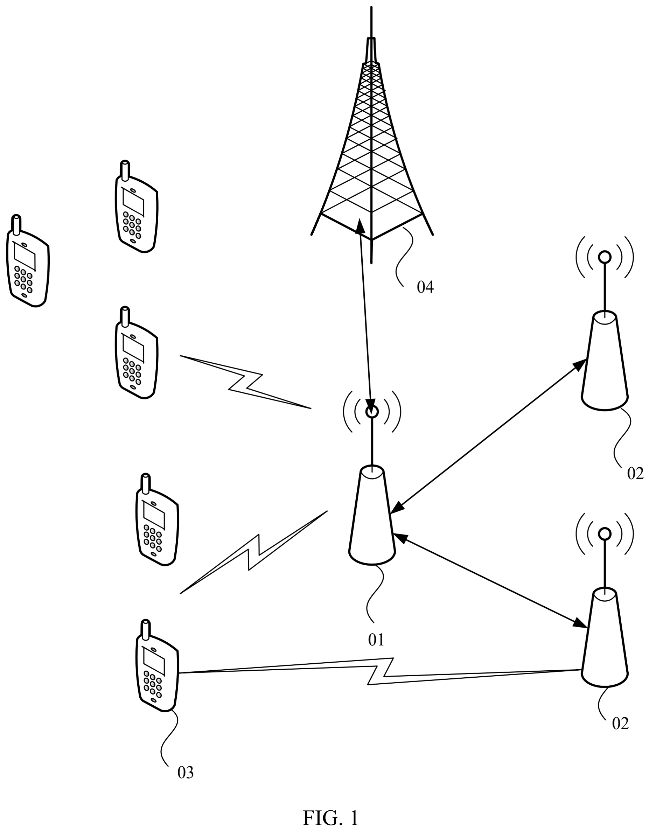

FIG. 1 is a diagram of an application scenario according to an embodiment of this application. As shown in FIG. 1, a master node 01 may interact with a plurality of secondary nodes 02, and the master node 01 further interacts with at least one terminal 03, to complete a cell configuration method in this application, and implement technical effect of sending data by the master node 02 to the terminal device 01. The master node 01 further interacts with a core network device 04.

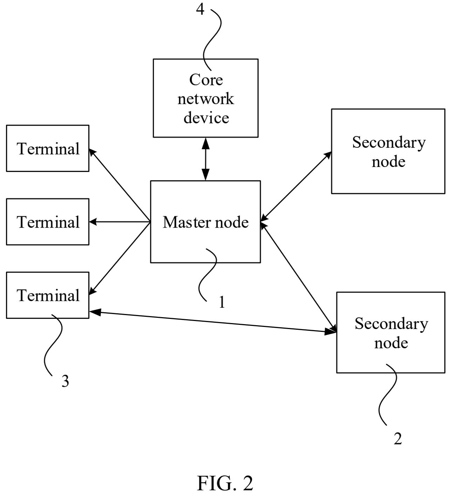

FIG. 2 is a diagram of a networking architecture according to an embodiment of this application. The networking architecture shown in FIG. 2 mainly includes a master node 1, a secondary node 2, a terminal 3, and a core network device 4. The master node 1 and the secondary node 2 each may be an access network device. The master node 1 is a base station that has signaling interaction with the core network device 4, and the secondary node 2 is a base station connected to the master node 1.

The plurality of master nodes form a radio access network. The radio access network may be a 5G radio access network, or the radio access network may be another existing radio access network, or the radio access network may be a radio access network that may appear in the future. In the networking architecture shown in FIG. 2, a plurality of secondary nodes 2 communicate with the master node 1, and the master node 1 communicates with a plurality of terminals 3, to perform cell configuration on the terminal 3, so that the terminal 3 communicates with at least one secondary node 2.

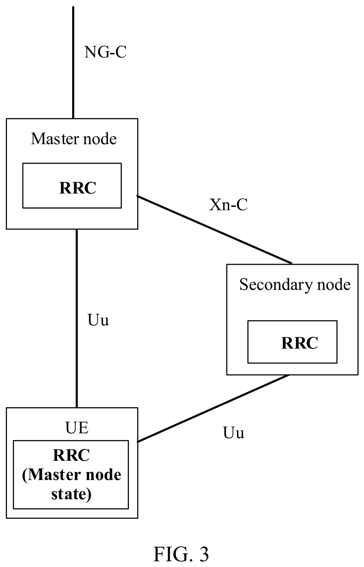

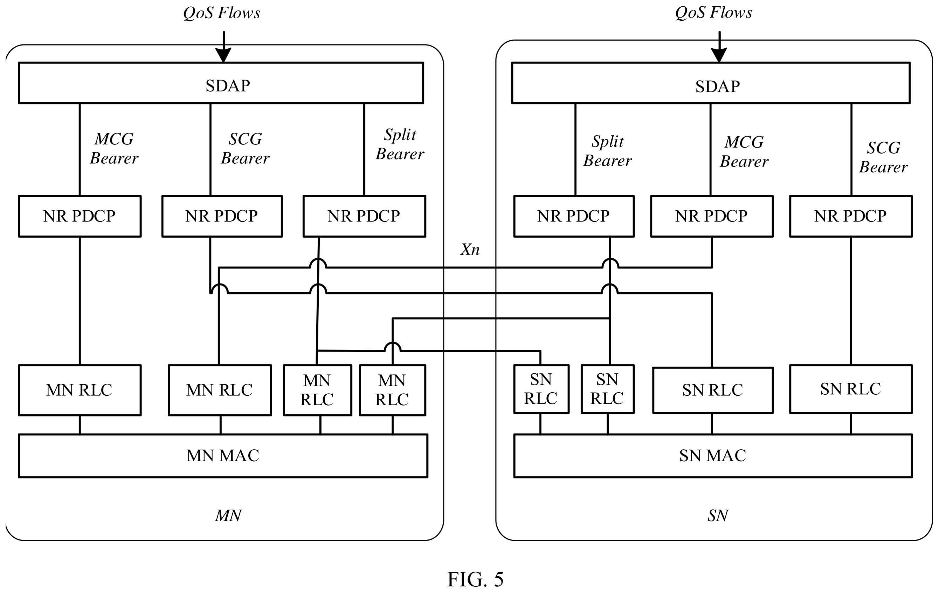

Refer to FIG. 3, FIG. 4, and FIG. 5. This application is a technical solution based on multi-radio dual connectivity (Multi-Radio dual connectivity, MR-DC). In a wireless network, one UE may communicate with a plurality of base stations. This is dual connectivity (dual connectivity, DC), which is also referred to as MR-DC. The plurality of base stations may be base stations belonging to a same RAT (radio access technology) (for example, all base stations are 4G (4th Generation) base stations, or all base stations are 5G (5th Generation) base stations), or may be base stations belonging to different RATs (for example, one base station is a 4G base station, and another base station is a 5G base station).

A network side may provide a communication service for the UE by using resources of the plurality of base stations to provide high-rate transmission for the UE. In DC, a base station that exchanges control-plane signaling with a core network is called a master node (Master Node, MN), and another base station is called a secondary node (Secondary Node, SN). Each base station has a different RLC/MAC entity. In DC, a DRB is divided into an MCG bearer, an SCG bearer, and a split bearer. The MCG bearer means that an RLC/MAC entity of the DRB is only on the master node, the SCG bearer means that an RLC/MAC entity of the DRB is only on the secondary node, and the split bearer means that RLC/MAC entities of the DRB are on both the master node and the secondary node.

A bearer whose PDCP is terminated on the MN is referred to as an MN terminated bearer (referred to as an MN terminated bearer). To be specific, DL data directly arrives at the MN from the core network, is processed by the PDCP/SDAP of the MN, and then is sent to the UE through the RLC/MAC. UL data is processed by the PDCP/SDAP of the MN, and then is sent to the core network. Similarly, a bearer whose PDCP is terminated on the SN is referred to as an SN terminated bearer (referred to as an SN terminated bearer). To be specific, DL data directly arrives at the SN from the core network, is processed by PDCP/SDAP of the SN, and then is sent to the UE through RLC/MAC. UL data is processed by PDCP/SDAP of the SN, and then is sent to the core network. In addition, in dual connectivity, both the master node and the secondary node have RRC entities, and both may generate an RRC message (that is, a control message, for example, a measurement message). In addition, the secondary node may directly send an RRC message generated by the secondary node to the UE (in this case, the RRC message sent by the UE to the secondary node is also directly sent to the secondary node. An RRC message directly exchanged between the secondary node and the UE is referred to as an SRB3). Alternatively, an RRC message generated by the secondary node may be notified to the master node, and the master node sends the RRC message to the UE (in this case, the UE also forwards, through the master node to the secondary node, the RRC message sent to the secondary node. To be specific, the UE sends the RRC message to the master node, and the master node forwards the message to the secondary node).

MR-DC include various DC, such as EN-DC, NGEN-DC, NE-DC and NR-DC.

In the EN-DC, a master node connected to a 4G core network EPC is an LTE base station eNB, and a secondary node is an NR base station gNB.

In the NGEN-DC, a master node connected to a 5G core network 5GC is an LTE base station ng-eNB, and a secondary node is an NR base station gNB.

In the NE-DC, a master node connected to a 5G core network 5GC is an NR base station gNB, and a secondary node is an LTE base station ng-eNB.

In the NR-DC, a master node connected to a 5G core network 5GC is an NR base station gNB, and a secondary node is an NR base station gNB.

For UE in the MR-DC, a user plane of the secondary node may be connected to a core network connected to the master node (that is, the core network may directly send data to the UE through the secondary node).

In the MR-DC, there is one primary cell in the master node, and there is one primary secondary cell in the secondary node. The primary cell is a cell that is deployed at a dominant frequency and in which UE initiates an initial connection establishment process or a connection reestablishment process, or a cell indicated as a primary cell in a handover process. The primary secondary cell is a cell in which UE initiates a random access procedure on the secondary node, or a cell in which the UE skips a random access procedure and initiates data transmission in a change process of the secondary node, or a cell of the secondary node in which the UE initiates random access in a process of performing synchronous reconfiguration.

The EN-DC is also called NSA. In an initial phase of 5G, UE on an EN-DC network cannot camp on an NR cell. An NR base station on which UE can camp is sometimes referred to as an SA NR base station.

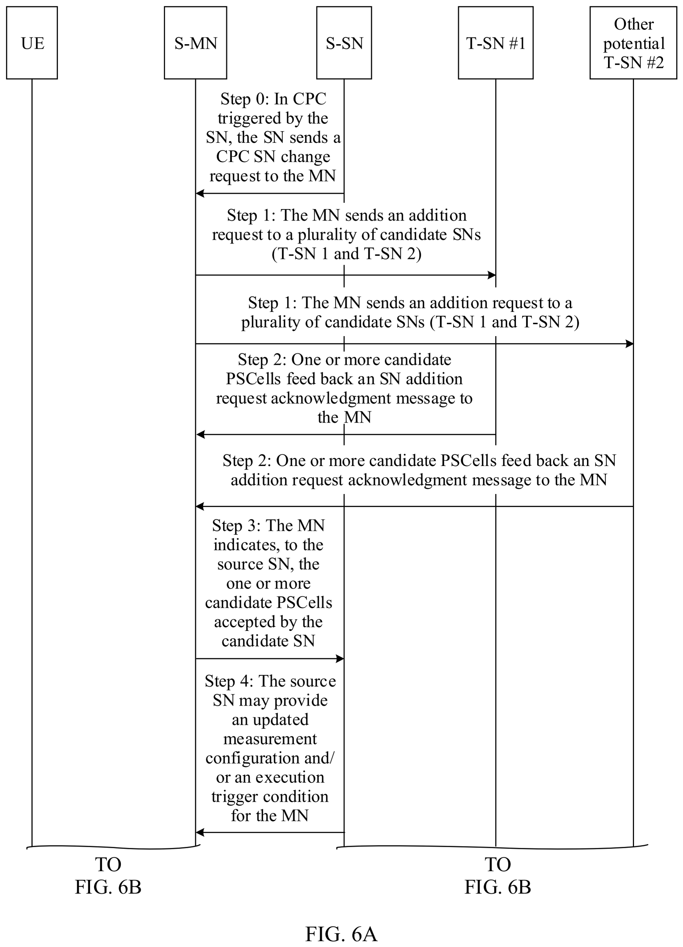

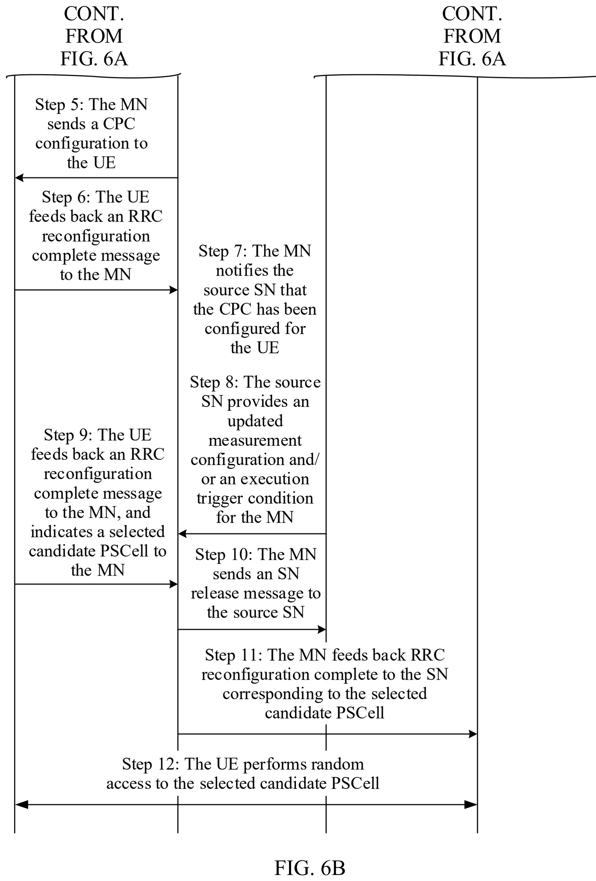

Refer to FIG. 6A and FIG. 6B. Rel-17 (the third version of the global 5G standard - Rel-17) introduces a conditional primary secondary cell addition/change (CPAC) mechanism. A corresponding trigger node (MN/SN) may prepare a plurality of candidate PSCells in advance, and a network side sends a CPAC configuration to UE, where the CPAC configuration includes candidate cell information, a measurement configuration, and a handover trigger condition. After receiving the CAPC configuration information, if the UE finds that signal quality of a candidate cell meets the handover trigger condition, the terminal performs random access by using the candidate cell as a target cell, to perform a PSCell addition or change procedure. During basic PSCell addition/change, the network side indicates one target candidate cell. During conditional primary secondary cell addition/change, the network side indicates a plurality of candidate cells, and the UE obtains, through evaluation, a candidate cell that meets a condition, and uses the candidate cell as a target cell. After CPA/CPC is successfully performed, the UE releases the stored CPAC configuration.

CPA: conditional primary secondary cell addition

When UE is not configured with a PSCell, a network side triggers PSCell addition, that is, configures MR-DC for the UE.

Step 1: An MN sends an addition request message to a plurality of candidate SNs (T-SN 1 and T-SN 2), where the request indicates CPAC, and the request message indicates one or more recommended candidate PSCells and a latest measurement result.

Step 2: If the candidate SN is allowed to access the one or more candidate PSCells prepared by the MN, one or more accepted candidate PSCells is selected, feedback is returned to the MN through an SN addition request acknowledgment message, and radio resources are reserved for the UE until an SN release message of the MN is received (step 10).

Step 5: The MN sends a CPA configuration to the UE, where the message includes radio air interface configurations and execution trigger conditions of all candidate SNs.

Step 6: The UE feeds back an RRC reconfiguration complete message to the MN. However, the UE does not immediately add any candidate PSCell. Instead, the UE continues to determine whether a target PSCell meets an execution trigger condition.

Step 9: When the UE detects that a candidate PSCell meets a corresponding execution trigger condition, the UE feeds back the RRC reconfiguration complete message to the MN, and indicates the selected candidate PSCell to the MN.

Step 10: The MN sends an SN release message to other candidate SNs, to indicate these base stations to release reserved resources and buffered data.

Step 11: The MN feeds back RRC reconfiguration complete to an SN corresponding to the selected candidate PSCell.

Step 12: The UE performs random access to the selected candidate PSCell.

A sequence of sending the RRC reconfiguration complete message (step 9) and performing random access to the target PSCell (step 12) by the UE is not limited, and is determined based on implementations of the UE.

CPC: conditional primary secondary cell change

A UE is configured with MR-DC (that is, an SN exists).

Step 0: If the SN triggers a CPC, the SN sends a CPC SN change request to an MN, where the request may indicate one or more recommended candidate PSCells and an execution trigger condition, a measurement configuration, and an SCG configuration (to support a candidate incremental configuration); or if the MN triggers a CPC, the MN may request a current SCG configuration from an S-SN to support a candidate incremental configuration.

Step 1: The MN sends an addition request to a plurality of candidate SNs (T-SN 1 and T-SN 2), where the request indicates the CPAC, and the request message may indicate one or more prepared candidate PSCells, a maximum quantity of PSCells that can be prepared by the candidate SN, and a latest measurement result, and may further provide an SCG configuration (so that a T-SN provides an SCG incremental configuration corresponding to the candidate PSCell by using the SCG configuration as a baseline).

Step 2: If the candidate SN is allowed to access the one or more candidate PSCells prepared by the MN, one or more accepted candidate PSCells is selected, and feedback is returned to the MN through an SN addition request acknowledgment message, radio resources are reserved for the UE until an SN release message of the MN is received (step 10), and the SN addition request acknowledgment message further includes the SCG configuration corresponding to the candidate PSCell. Based on the SCG configuration in step 1, the candidate SN prepares the SCG configuration corresponding to the candidate PSCell based on an RRC configuration type of the delta configuration (delta config). If the SCG configuration is not provided in step 1, the candidate SN prepares the SCG configuration corresponding to the candidate PSCell based on an RRC configuration type of full configuration (full config).

Steps 3 and 4: (Optional) In an SN triggering procedure, the MN may indicate, to a source SN, one or more candidate PSCells accepted by the candidate SN, and the source SN may provide an updated measurement configuration and/or an execution trigger condition for the MN.

Step 5: The MN sends the CPC configuration to the UE, where the message includes radio air interface configurations and execution trigger conditions of all candidate SNs.

Step 6: The UE feeds back an RRC reconfiguration complete message to the MN. However, the UE does not immediately add any candidate PSCell. Instead, the UE continues to determine whether a target PSCell meets an execution trigger condition.

Step 7: The MN notifies the source SN that the CPC has been configured for the UE, and the source SN starts early data transfer. In the SN triggering procedure, if step 3 and step 4 are skipped, the MN may further indicate, to the source SN, the one or more candidate PSCells accepted by the candidate SN.

Step 8: (Optional) In the SN triggering procedure, the source SN may provide the updated measurement configuration and/or the execution trigger condition for the MN, and the MN reconfigures the UE, as described in step 5 and step 6.

Step 9: When the UE detects that a candidate PSCell meets a corresponding execution trigger condition, the UE feeds back the RRC reconfiguration complete message to the MN, and indicates the selected candidate PSCell to the MN.

Step 10: The MN sends an SN release message to the source SN, to indicate the source SN to stop data transmission with the UE and perform late data transfer with an SN corresponding to the selected candidate PSCell, and the MN sends the SN release message to other candidate SNs, to indicate other candidate base stations to release reserved resources and buffered data.

Step 11: The MN feeds back RRC reconfiguration complete to the SN corresponding to the selected candidate PSCell.

Step 12: The UE performs random access to the selected candidate PSCell. A sequence of sending the RRC reconfiguration complete message (step 9) and performing random access to the target PSCell (step 12) by the UE is not limited, and is determined based on implementations of the UE.

However, a conditional primary secondary cell addition/change (CPAC) mechanism is introduced in Rel-17. In a CPC procedure and a CPA procedure triggered by an MN in Rel-17, a master node does not provide an SCG configuration to a candidate secondary node, and the candidate secondary node provides an SCG full configuration corresponding to the candidate primary secondary cell for the master node. The master node delivers the full configuration to the terminal, so that the terminal accesses the candidate primary secondary cell based on the full configuration. However, during continuous CPAC, when the full configuration of the existing procedure is used currently, overheads of signaling transmission and terminal storage may be high.

In addition, because the primary secondary cell addition/change in the CPAC of Rel-17 needs to be performed only once, after the primary secondary cell addition is completed, the UE releases the candidate cell configuration used for conditional execution. In Rel-18 (first version of Rel-18 standard of 5G-Advanced), to support continuous primary secondary cell addition/change, after initial primary secondary cell addition (from no primary secondary cell to a primary secondary cell #1) is performed based on a full configuration, the full configuration is further used for subsequent execution of a primary secondary cell change (from the primary secondary cell #1 to a primary secondary cell #2, and from a primary secondary cell #n to a primary secondary cell #m, which is not limited), so that a terminal needs to continue to store an SCG configuration of a candidate PSCell. When the full configuration is applied, terminal storage overheads are too high. In addition, when the full configuration is applied to perform conditional primary secondary cell addition/change, a PDCP (Packet Data Convergence Protocol) entity is released and re-added. Therefore, a problem of a long user plane data interruption time and even a data packet loss is caused. A data packet loss problem is usually caused when a scheduling interval is greater than a PDCP timer, and the timer expires. After the timer expires, a base station actively discards a packet.

In this application, M candidate primary secondary cells are determined, and second reference configuration information and RRC messages corresponding to N candidate primary secondary cells are delivered to a terminal, so that the terminal can access, based on the second reference configuration information and an RRC message of the first candidate primary secondary cell, a first candidate primary secondary cell based on a delta configuration of the RRC message of the first candidate primary secondary cell. After accessing the first candidate primary secondary cell, the terminal continues to evaluate another candidate primary secondary cell, and accesses the another candidate primary secondary cell based on an RRC message of a delta configuration of the another candidate primary secondary cell. Therefore, overheads of RRC signaling transmission and terminal storage are reduced in continuous CPAC in the delta configuration manner.

The present invention is mainly applied to a 4G (4th Generation) system, a 5G (5th Generation) system, an NTN (non-terrestrial network) system, or a future mobile communication system, and may alternatively be applied to another communication system. The present invention may alternatively be applied to another communication system, as long as an entity in the communication system needs to send information, and another entity needs to receive the information.

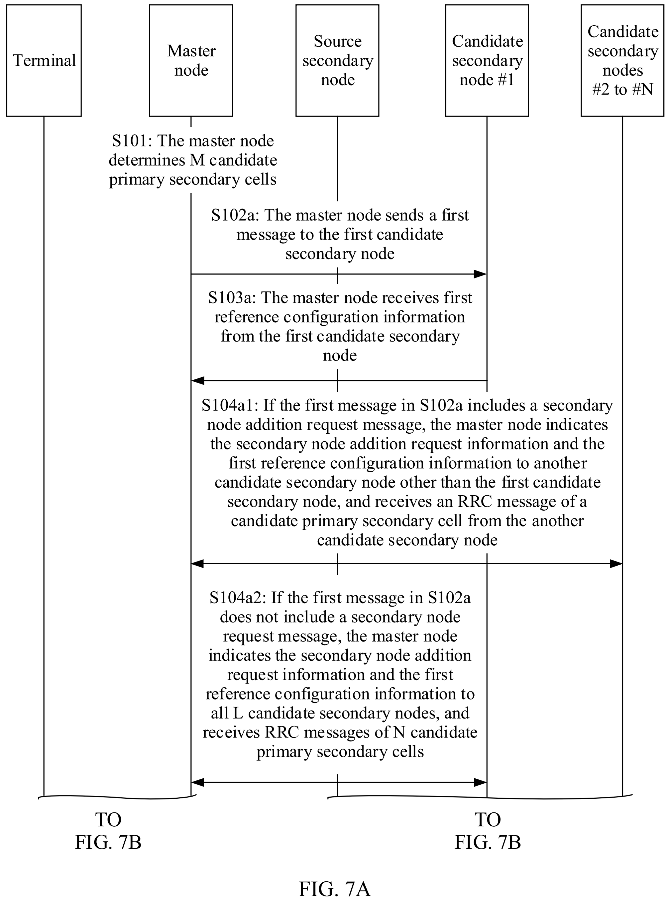

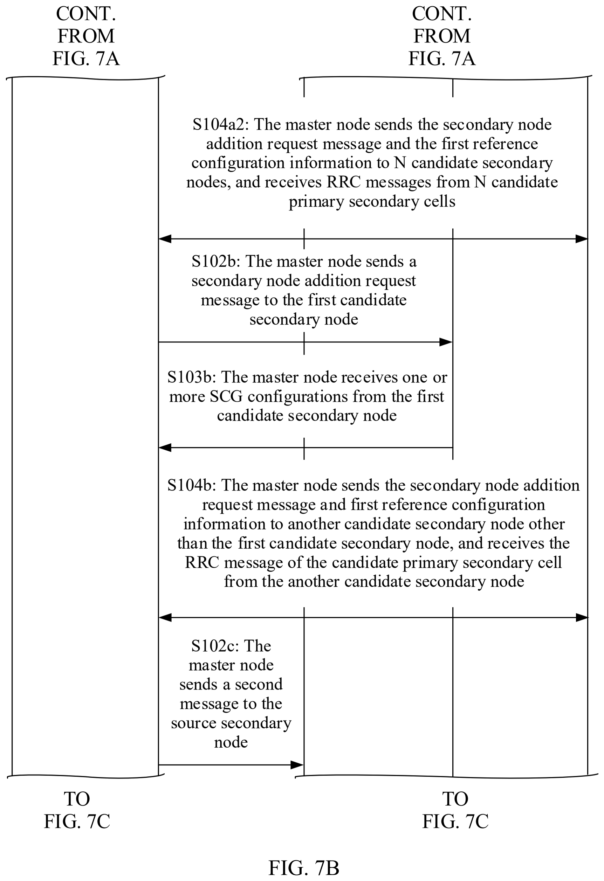

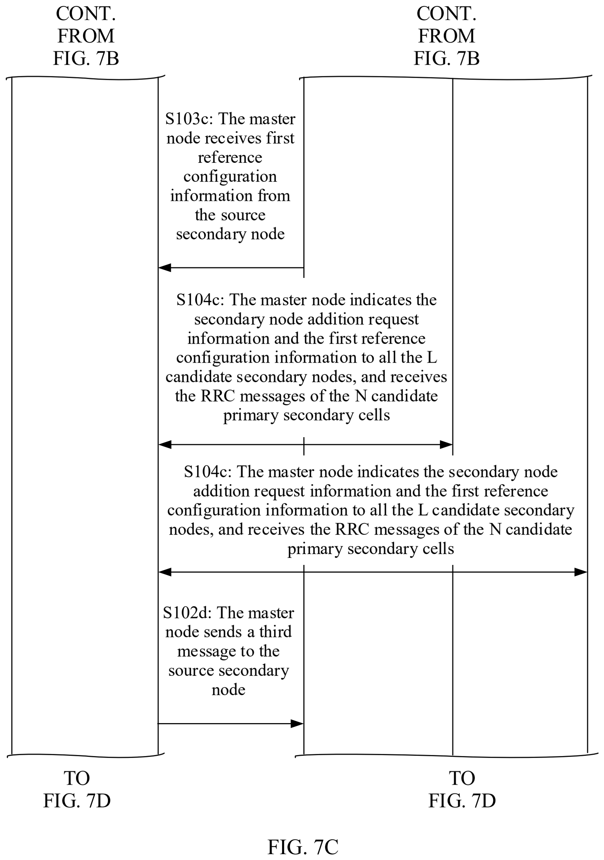

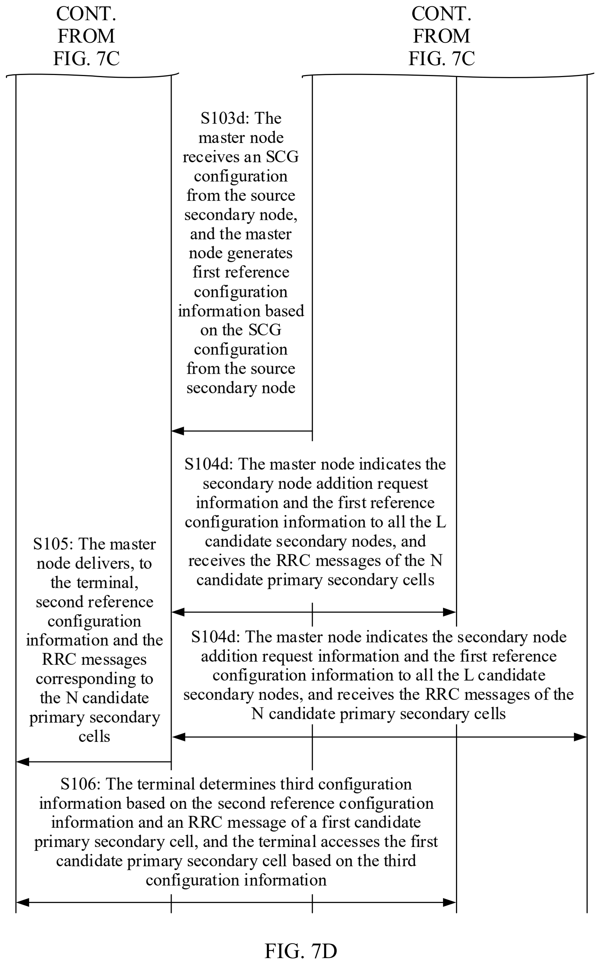

FIG. 7A to FIG. 7D are a signaling diagram of a cell configuration method according to an embodiment of this application. As shown in FIG. 7A to FIG. 7D, the method includes the following steps.

S101: A master node determines M candidate primary secondary cells, where M is a positive integer.

In this embodiment, the candidate primary secondary cell is a primary secondary cell in a candidate secondary node, and the candidate secondary node is a secondary node that can be accessed by a terminal. Specifically, in MR-DC, there is one primary cell (Primary Cell, PCell) in the master node, and there is one primary secondary cell (Primary Secondary Cell, primary secondary cell) in the secondary node. The primary cell is a cell that is deployed at a dominant frequency and in which a terminal initiates an initial connection establishment process or a connection reestablishment process, or a cell indicated as a primary cell in a handover process. The primary secondary cell is a cell in which a terminal initiates a random access procedure on the secondary node, or a cell in which the terminal skips a random access procedure and initiates data transmission in a change process of the secondary node, or a cell of the secondary node in which the terminal initiates random access in a process of performing synchronous reconfiguration.

S102a: The master node sends a first message to a first candidate secondary node, where the first message is used to request the first candidate secondary node to provide first reference configuration information.

For example, the master node sends the first message to one candidate secondary node, where the first message is used to request the candidate secondary node to provide a reference configuration, and the first message may be information that carries an indication for requesting the first candidate secondary node to return the first reference configuration information.

The first message may include candidate primary secondary cell information, and the first message may further include candidate secondary node addition request information. The secondary node addition request information is used to request the candidate secondary node to allocate a resource to the terminal.

The first message is sent to the first candidate secondary node, to implement targeted triggering of the first candidate secondary node and obtain the first reference configuration information of the first candidate secondary node. This helps the master node obtain the first reference configuration information based on a requirement.

S102b: The master node sends a secondary node addition request message to the first candidate secondary node, where the secondary node addition request message is used to request the first candidate secondary node to provide one or more pieces of SCG configuration information.

For example, the master node sends the secondary node addition request message to one candidate secondary node, where the secondary node addition request message maybe information that carries an indication for requesting the first candidate secondary node to return one or more pieces of SCG configuration information.

Technical effect of sending the secondary node addition request message to the first candidate secondary node and obtaining the one or more SCG configurations of the first candidate secondary node helps the master node determine the first reference configuration information based on the SCG configuration obtained in an existing secondary node addition procedure.

S102c: The master node sends a second message to a source secondary node, where the second message is used to request the source secondary node to provide the first reference configuration information.

For example, the master node sends the second message to one candidate secondary node, where the second message is used to request the source secondary node to provide a reference configuration, and the second message may be information that carries an indication for requesting the source secondary node to return the first reference configuration information.

The second message is sent to the source secondary node, to implement technical effect of triggering the source secondary node to prepare the first reference configuration information and obtaining the first reference configuration information provided by the source secondary node. This helps the master node determine the first reference configuration information.

S102d: The master node sends a third message to the source secondary node, where the third message is used to request the source secondary node to provide a current SCG configuration of the terminal.

For example, the master node sends the third message to the source secondary node, where the third message may be information that carries an indication for requesting the source secondary node to return SCG full configuration information currently applied by the terminal to the UE.

The third message is sent to the source secondary node, to implement technical effect of triggering the source secondary node and obtaining the SCG configuration of the source secondary node. This helps the master node determine the first reference configuration information.

S103: The master node obtains the first reference configuration information.

For example, the first reference configuration information includes SCG configuration information, and the first reference configuration may further include one or more of MCG configuration information and a candidate primary secondary cell execution trigger condition. The first reference configuration may alternatively be an independent RRC reconfiguration message, or may be included in an RRC reconfiguration message of a continuous CPAC configuration.

It should be noted that, after the terminal successfully performs CPA/CPC in Rel-17, the terminal releases a stored CPAC configuration, and does not continue to evaluate an execution trigger condition of a candidate cell. Currently, a selective activation subject is discussed in Rel-18, that is, a solution of supporting continuous conditional primary secondary cell change and/or primary secondary cell addition (primary secondary cell change/addition may also be referred to as SCG change/addition). In other words, after a network side configures a condition reconfiguration of a candidate primary secondary cell for a terminal, after the terminal performs primary secondary cell addition or change, the terminal stores the condition reconfiguration of the candidate primary secondary cell, continues to evaluate whether an execution trigger condition of the candidate cell is met, and subsequently adds or changes the primary secondary cell. Therefore, the network does not need to deliver the CPA/CPC configuration to the terminal again for subsequent primary secondary cell addition or change.

At the RAN2 meeting #119, it is agreed to support use of an RRC configuration type of a delta configuration for an RRC message corresponding to a candidate primary secondary cell, and it is confirmed that a terminal may separately store a reference configuration. This indicates that the candidate secondary node first needs to generate an SCG configuration of a delta configuration based on the reference configuration. If the SCG configuration of the candidate primary secondary cell is a delta configuration, an RRC message corresponding to the candidate cell is an RRC configuration type of the delta configuration. Then, when the terminal evaluates a candidate primary secondary cell that meets an execution trigger condition, the terminal first applies the reference configuration, and then applies the delta configuration corresponding to the candidate primary secondary cell. In this manner, the terminal may apply a complete configuration of the candidate primary secondary cell, so that synchronization and random access are completed with the candidate primary secondary cell. Compared with full configuration, incremental configuration reduces overheads of signaling transmission and storage.

Specifically, that the master node obtains the first reference configuration information includes:
S103a: The master node receives the first reference configuration information from the first candidate secondary node, where the first candidate secondary node is configured to manage one or more of the M candidate primary secondary cells.

For example, the candidate secondary node prepares, based on the reference configuration, the delta configuration corresponding to the candidate primary secondary cell. In this embodiment, all candidate secondary nodes prepare the same first reference configuration information. The first reference configuration information includes SCG configuration information, and the first reference configuration information may further include one or more of an MCG configuration, an execution trigger condition corresponding to the candidate primary secondary cell, and a measurement configuration corresponding to the candidate primary secondary cell.

For example, the candidate secondary node indicates the first reference configuration information to the master node based on the first message. The candidate secondary node may further indicate, based on first message, the RRC message corresponding to the candidate primary secondary cell.

Specifically, the candidate secondary node prepares the first reference configuration information based on the first message, and indicates the first reference configuration information to the master node. If the first message in S102a includes the secondary node addition request message information, the candidate secondary node prepares, based on the secondary node addition request message information in the first message and the first reference configuration information, the RRC message of the delta configuration corresponding to the candidate primary secondary cell, and indicates the RRC message to the master node.

Specifically, that the master node obtains the first reference configuration information includes: S103b: The master node receives one or more SCG configurations from the first candidate secondary node, where the first candidate secondary node is configured to manage one or more of the M candidate primary secondary cells, the one or more SCG configurations are full configurations, and M is a positive integer.

The master node determines the first reference configuration information based on the one or more SCG configurations.

For example, the one or more SCG configurations are SCG full configurations that correspond to one or more candidate primary secondary cells and that are provided by the first candidate secondary node for the terminal. The SCG full configurations corresponding to the one or more candidate primary secondary cells may be used by the terminal to access the candidate primary secondary cells provided by the first candidate secondary node.

For example, after determining the first reference configuration information, the master node provides, for the first candidate secondary node, an RRC message for requesting a delta configuration of one or more candidate primary secondary cells.

For example, the master node determines the reference configuration based on the SCG configuration that corresponds to the candidate primary secondary cell and that is provided by the first candidate secondary node. The master node sends the candidate secondary node addition request to the first candidate secondary node, where the candidate secondary node addition request is used to request to allocate a resource to the terminal. The candidate secondary node indicates, to the master node, one or more accepted candidate primary secondary cells and RRC configuration information corresponding to the candidate primary secondary cell, where the RRC configuration information corresponding to the candidate primary secondary cell includes an SCG full configuration. The master node determines a reference configuration based on the SCG full configuration, and provides the reference configuration for all candidate secondary nodes, or to a candidate secondary node other than the candidate secondary node.

Optionally, the master node obtains a first common parameter set configured by one secondary node (secondary cell group), and determines reference configuration information based on the first common parameter set, where the first common parameter set includes a parameter set of SCG configuration information.

The master node obtains a first parameter set configured by one secondary node (secondary cell group), determines reference configuration information, and provides the reference configuration information for a candidate primary secondary node. The candidate primary secondary node determines a second parameter set based on the first parameter set, where the second parameter set is used to prepare an SCG configuration of a delta configuration of the candidate primary secondary cell.

The master node provides a second common parameter set configured by one secondary node (secondary cell group), and determines reference configuration information based on the second common parameter set, where the second common parameter set includes SCG configuration information previously applied by the terminal and/or a parameter set configured by a preset template secondary cell group.

By receiving the one or more SCG configurations and determining the first reference configuration information based on the one or more SCG configurations, the master node may determine, based on the obtained SCG configuration, the first reference configuration information required by the master node, so that an application scope is extended.

Specifically, that the master node obtains the first reference configuration information includes:
S103c: The master node receives the first reference configuration information from the source secondary node, where the source secondary node is a secondary node corresponding to a primary secondary cell currently accessed by the terminal.

For example, the source secondary node provides the reference configuration for the master node. Specifically, the master node requests the source secondary node to provide the reference configuration, and the source secondary node provides the first reference configuration information for the master node.

Specifically, that the master node obtains the first reference configuration information includes:
S103d: The master node receives the SCG configuration from the source secondary node, where the source secondary node is a secondary node corresponding to a primary secondary cell currently accessed by the terminal, and the SCG configuration of the source secondary node is an SCG full configuration currently configured by the source secondary node for the terminal.

The master node determines the first reference configuration information based on the SCG configuration from the source secondary node.

For example, the master node uses the SCG configuration provided by the source secondary node as the reference configuration. Specifically, the master node requests the source secondary node to provide the current SCG configuration of the terminal, the source secondary node provides the current SCG configuration to the master node, and the master node uses the current SCG configuration as the reference configuration.

S104: The master node obtains RRC messages corresponding to N candidate primary secondary cells, where N is a positive integer, the N candidate primary secondary cells are included in the M candidate primary secondary cells, an RRC message of a first candidate primary secondary cell in the N candidate primary secondary cells includes SCG configuration information of the first candidate primary secondary cell, the SCG configuration information of the first candidate primary secondary cell is a delta configuration based on the first reference configuration information, and the first candidate primary secondary cell is one of the N candidate primary secondary cells.

For example, the RRC message includes SCG configuration information corresponding to the primary secondary cell, and may further include corresponding MCG configuration information. An RRC message type corresponding to the candidate primary secondary cell is a delta configuration. N is a positive integer, the N candidate primary secondary cells are included in the M candidate primary secondary cells, an RRC message of a first candidate primary secondary cell in the N candidate primary secondary cells includes SCG configuration information of the first candidate primary secondary cell, the SCG configuration information of the first candidate primary secondary cell is a delta configuration based on the first reference configuration information, and the first candidate primary secondary cell is one of the N candidate primary secondary cells.

Specifically, that the master node obtains the RRC messages corresponding to the N candidate primary secondary cells includes:
S104a1: If the first message in S102a includes the secondary node addition request message, the master node indicates the secondary node addition request information and the first reference configuration information to another candidate secondary node other than the first candidate secondary node, and receives an RRC message of a candidate primary secondary cell from the another candidate secondary node.
S104a2: If the first message in S102a does not include the secondary node addition request message, the master node indicates the secondary node addition request information and the first reference configuration information to all L candidate secondary nodes, and receives the RRC messages of the N candidate primary secondary cells.
S104b: If the first reference configuration information is obtained in S102b, the master node indicates the secondary node addition request information and the first reference configuration information to all the candidate secondary nodes or the another candidate secondary node other than the first candidate secondary node, and receives the RRC message of the candidate primary secondary cell from the another secondary node.
S104c: The master node indicates the secondary node addition request information and the first reference configuration information to all the L candidate secondary nodes, and receives the RRC messages of the N candidate primary secondary cells.
S104d: The master node indicates the secondary node addition request information and the first reference configuration information to all the L candidate secondary nodes, and receives the RRC messages from the N candidate primary secondary cells. The secondary node addition request information and the first reference configuration information indicate the candidate secondary node to prepare, based on the first reference configuration information, a candidate primary secondary cell and an RRC message corresponding to the candidate primary secondary cell, and indicate the RRC message to the master node.
S105: The master node delivers, to the terminal, the second reference configuration information and the RRC messages corresponding to the N candidate primary secondary cells. The second reference configuration information includes the first reference configuration information. The second reference configuration information and the RRC message of the first candidate primary secondary cell are used to determine third configuration information, and the third configuration information is used by the terminal to access the first candidate primary secondary cell.

For example, the RRC message corresponding to the candidate primary secondary cell may further include corresponding MCG air interface configuration information, which is a delta configuration, and the delta configuration corresponds to a reference configuration. The terminal needs to first apply the second reference configuration information, and then apply the RRC message of the delta configuration corresponding to the candidate primary secondary cell. Therefore, the second reference configuration information configured by the master node for the terminal includes the first reference configuration information (SCG configuration) and the MCG configuration, and may further include one or more of an execution trigger condition and a measurement configuration corresponding to the N candidate primary secondary cells. The second reference configuration information may be an information element, or may be an RRC reconfiguration message.

For example, the second reference configuration information may alternatively be a separate RRC reconfiguration message. The master node delivers an RRC reconfiguration message of a continuous CPC configuration to the terminal, where the RRC reconfiguration message may include the RRC messages corresponding to the N candidate primary secondary cells, and may further include one or more of an execution trigger condition, a measurement configuration, and second reference configuration information of the N candidate primary secondary cells.

For example, the terminal may be in a single connection (no primary secondary cell is configured), or may be in a dual connection (MR-DC is configured). The candidate secondary node addition message includes information about a recommended candidate primary secondary cell and a measurement result.

In a continuous CPAC procedure triggered by the master node, the master node obtains the reference configuration, to provide, for the at least one candidate secondary node, the RRC message to support the delta configuration of the candidate primary secondary cell. Compared with the full configuration, this reduces overheads of RRC signaling transmission and storage, reduces a time of a user plane data interruption time, and avoids a data packet loss.

The terminal may be in a single connection (no primary secondary cell is configured), or may be in a dual connection (MR-DC is configured).

In this embodiment, the M candidate primary secondary cells are determined, to determine a possible primary secondary cell that can be accessed by the terminal. The second reference configuration information and the RRC messages corresponding to the N candidate primary secondary cells are delivered to the terminal, so that the terminal accesses the first candidate primary secondary cell based on the RRC message of the delta configuration of the first candidate primary secondary cell. Therefore, during continuous CPAC, overheads of RRC signaling transmission and terminal storage are reduced in a delta configuration manner.

In addition, the terminal only needs to perform PDCP reestablishment or recovery based on the first reference configuration information of the candidate secondary node and the RRC message of the delta configuration of the first candidate primary secondary cell, to resume data transmission.

Therefore, compared with a method in which the PDCP release and re-addition needs to be performed because a full configuration of the RRC message of the first candidate cell needs to be performed when the terminal is handed over from the current primary secondary cell to the first candidate cell, this step reduces overheads of RRC signaling and storage, reduces a user plane data interruption time, and avoids a data packet loss.

S106: The terminal determines the third configuration information based on the second reference configuration information and the RRC message of the first candidate primary secondary cell, and the terminal accesses the first candidate primary secondary cell based on the third configuration information.

In this step, the third configuration information includes the SCG configuration information of the candidate primary secondary cell, the third configuration information further includes the measurement configuration and/or the handover trigger condition corresponding to at least one candidate primary secondary cell of the first candidate primary secondary cell, and the third configuration information further includes the MCG configuration information of the candidate primary secondary cell.

For example, that the terminal determines the third configuration information based on the second reference configuration information and the RRC message of the first candidate primary secondary cell, and the terminal accesses the first candidate primary secondary cell based on the third configuration information includes:
When the terminal determines that the first candidate primary secondary cell meets a corresponding execution trigger condition, the terminal accesses the first candidate primary secondary cell based on the first reference configuration information and the RRC message of the first candidate primary secondary cell.

In an example embodiment, the terminal continues to determine whether a candidate primary secondary cell meets an execution trigger condition. When the terminal detects that one candidate primary secondary cell (a candidate primary secondary cell #1) meets a corresponding execution trigger condition, the terminal applies an RRC message corresponding to the candidate primary secondary cell (the candidate primary secondary cell #1), and feeds back reconfiguration complete to the MN, to indicate information about the candidate primary secondary cell (the candidate primary secondary cell #1).

The terminal performs random access to the candidate primary secondary cell (the candidate primary secondary cell #1).

The RRC message corresponding to the candidate primary secondary cell may further include corresponding MCG air interface configuration information, which is a delta configuration, and the delta configuration corresponds to a reference configuration. The terminal needs to first apply the second reference configuration information, and then apply the RRC message of the delta configuration corresponding to the candidate primary secondary cell. Therefore, the second reference configuration information configured by the master node for the terminal needs to indicate the first reference configuration information (SCG configuration) and the MCG configuration SCG configuration, and may further include one or more of an execution trigger condition and a measurement configuration corresponding to the N candidate primary secondary cells. The second reference configuration information may be an information element, or may be an RRC message. This is not limited.

A sequence of sending the RRC reconfiguration complete message and performing random access by the terminal is not limited, and is determined based on implementations of the terminal.

After the terminal successfully changes to the candidate primary secondary cell #1, the terminal continues to determine whether a candidate primary secondary cell meets an execution trigger condition. When the terminal detects that one candidate primary secondary cell (a candidate primary secondary cell #2) meets a corresponding execution trigger condition, the terminal applies an RRC message corresponding to the candidate primary secondary cell (the candidate primary secondary cell #2), and feeds back reconfiguration complete to the MN, to indicate information about the candidate primary secondary cell (the candidate primary secondary cell #2).

The terminal performs random access to the candidate primary secondary cell (the candidate primary secondary cell #2).

After the terminal successfully accesses the candidate primary secondary cell, the terminal continues to determine whether a candidate primary secondary cell meets an execution trigger condition until the network side indicates the terminal to release the continuous CPAC configuration.

In this step, the terminal may determine, based on the second reference configuration information and the RRC message of the first candidate primary secondary cell, the third configuration information used to access the first candidate primary secondary cell, to implement technical effect of obtaining the third configuration information based on the delta configuration. Therefore, during continuous CPAC, overheads of RRC signaling transmission and terminal storage are reduced in the delta configuration manner.

In addition, the terminal only needs to determine the third configuration information based on the first reference configuration information of the candidate secondary node and the RRC message of the delta configuration of the first candidate primary secondary cell, and the terminal only needs to perform PDCP reestablishment or recovery to continue data transmission.

Therefore, compared with a current method in which the PDCP release and re-addition needs to be performed because a full configuration needs to be performed when the terminal is handed over from the current primary secondary cell to the first candidate cell, this step reduces overheads of RRC signaling and storage, reduces a user plane data interruption time, and avoids a data packet loss.

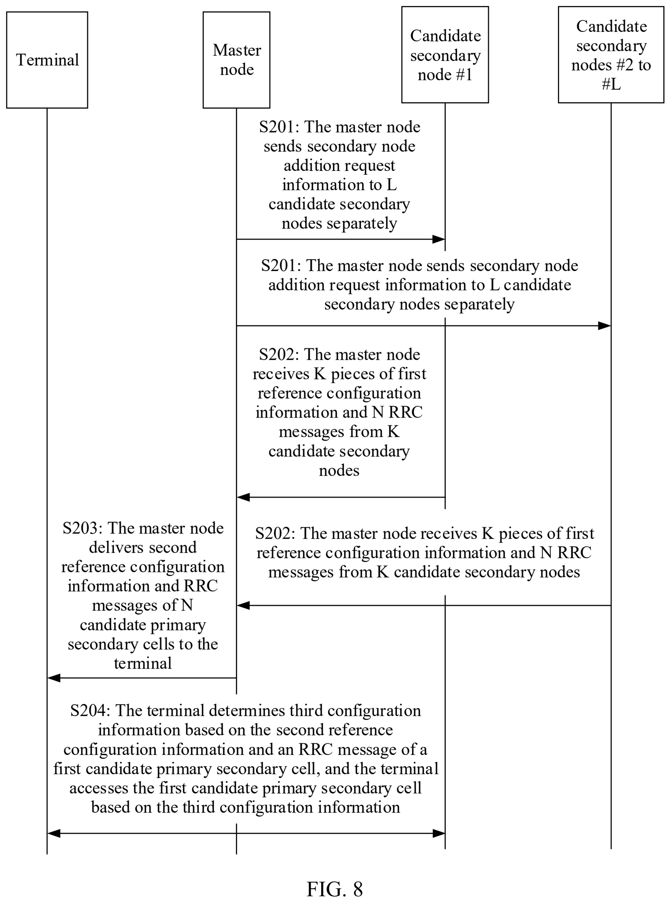

FIG. 8 is a signaling diagram of a cell configuration method according to an embodiment of this application. As shown in FIG. 8, the method includes the following steps.

S201: A master node sends secondary node addition request information to L candidate secondary nodes separately, where K candidate secondary nodes are included in the L candidate secondary nodes.

For example, the master node sends a conditional candidate secondary node addition request message to the L candidate secondary nodes, to request the L candidate secondary nodes to allocate a radio resource to a terminal. A recommended candidate primary secondary cell may be indicated in the secondary node addition request message.

Optionally, sending the secondary node addition request information to the L candidate secondary nodes separately includes: responding to a secondary node change message received from a source secondary node.

For example, if the source secondary node triggers a continuous CPAC (CPC) procedure, a secondary node change request message is sent to the master node, where the secondary node change request message indicates information about the recommended candidate primary secondary cell and a corresponding execution trigger condition.

S202: The master node receives K pieces of first reference configuration information and N RRC messages from K candidate secondary nodes, where K is a positive integer, N is a positive integer, one candidate secondary node corresponds to one piece of first reference configuration information and one or more RRC messages, an RRC message of a first candidate secondary node in the K candidate secondary nodes includes SCG configuration information of a first candidate primary secondary cell, the SCG configuration information of the first candidate primary secondary cell is a delta configuration based on first reference configuration information of the first candidate secondary node, and the first reference configuration information includes an SCG configuration.

For example, the K pieces of first reference configuration information are first reference configuration information of each candidate secondary node in the K candidate secondary nodes. In other words, each candidate secondary node has corresponding first reference configuration information.

The master node sends the conditional candidate secondary node addition request message to the candidate secondary node, to request the candidate secondary node to allocate a radio resource to the terminal. The information about the recommended candidate primary secondary cell may be indicated in the addition request message.

The candidate secondary node determines the first reference configuration information, and feeds back, to the master node, a prepared candidate primary secondary cell, the first reference configuration information, and the RRC message corresponding to each candidate primary secondary cell. The RRC message includes SCG air interface configuration information corresponding to the candidate primary secondary cell, and may further include MCG air interface configuration information. A type of the RRC message corresponding to the candidate primary secondary cell is a delta configuration generated based on a reference configuration determined by the candidate secondary node.

S203: The master node delivers second reference configuration information and RRC messages of N candidate primary secondary cells to the terminal, where the second reference configuration information includes the K pieces of first reference configuration information.

For example, third configuration information is determined based on the first reference configuration information of the first candidate secondary node in the second reference configuration information and the RRC message of the first candidate primary secondary cell, where the third configuration information is used by the terminal to access the first candidate primary secondary cell. The RRC message of the first candidate primary secondary cell in the N candidate primary secondary cells includes the SCG configuration information of the first candidate primary secondary cell. The SCG configuration information of the first candidate primary secondary cell is the delta configuration based on the first reference configuration information of the first candidate secondary node.

The terminal further receives an execution trigger condition and measurement configuration information that correspond to the N candidate primary secondary cells and that are from the master node.

For example, the second reference configuration information may alternatively be a separate RRC reconfiguration message. The RRC reconfiguration message of the continuous CPC configuration delivered by the master node to the terminal may include the RRC messages corresponding to N candidate primary secondary cells, and may further include one or more of the execution trigger condition, the measurement configuration, and the second reference configuration information of the N candidate primary secondary cells, and may further include indication information of a correspondence between the RRC messages of N candidate primary secondary cells and the K pieces of first reference information.

The master node delivers first indication information to the terminal, where the first indication information indicates a correspondence between the K pieces of first reference configuration information and the RRC messages of the N candidate primary secondary cells or the N candidate primary secondary cells.

A candidate primary secondary cell #3 and a candidate primary secondary cell #4 are cells of a candidate secondary node #2, and the candidate secondary node #2 prepares RRC messages of the candidate primary secondary cell #3 and the candidate primary secondary cell #4 based on a reference configuration #2 of the candidate secondary node #2. In this case, the master node needs to indicate, to the terminal, a relationship between the candidate primary secondary cell and the reference configuration, or indicate a relationship between the RRC message of the candidate primary secondary cell and the reference configuration, so that the terminal can find corresponding first reference configuration information for the RRC message of the candidate primary secondary cell.

The second reference configuration information includes K pieces of first reference configuration information (a first reference configuration #1, a first reference configuration #2...) and MCG configuration information, and may further include one or more of an execution trigger condition and measurement configuration information that correspond to the N candidate primary secondary cells.

In a continuous CPAC procedure, the procedure may be triggered by the master node, or may be triggered by the source secondary node. The candidate secondary node prepares, based on respective reference configurations, an RRC message of a candidate primary secondary cell in a delta configuration form, to reduce RRC signaling, reduce a time of a user plane data interruption time, and avoid a data packet loss. When performing primary secondary cell change, the terminal determines whether an intra-station candidate primary secondary cell change or an inter-station candidate primary secondary cell change is performed based on whether a reference configuration corresponding to the candidate primary secondary cell changes, and performs a PDCP operation based on the intra-station candidate primary secondary cell change or the inter-station candidate primary secondary cell change, to further reduce a user plane interruption time and improve user experience.

When a plurality of reference configurations are used, in a continuous CPAC procedure, the procedure may be triggered by the master node, or may be triggered by the source secondary node. A manner in which the candidate secondary node supports the delta configuration based on the respective reference configurations is specified, and a manner in which the terminal applies the delta configuration is specified.

Because the primary secondary cell addition/change in the CPAC of Rel-17 needs to be performed only once, after the primary secondary cell addition is completed, the UE releases the candidate cell configuration used for conditional execution. In Rel-18 (first version of Rel-18 standard of SG-Advanced), to support continuous primary secondary cell addition/change, after initial primary secondary cell addition (from no primary secondary cell to a primary secondary cell #1) is performed based on a full configuration, the full configuration is further used for subsequent execution of a primary secondary cell change (from the primary secondary cell #1 to a primary secondary cell #2, and from a primary secondary cell #n to a primary secondary cell #m, which is not limited), so that the terminal needs to perform PDCP (Packet Data Convergence Layer Protocol) release and re-addition when the terminal performs conditional primary secondary cell addition/change by applying the full configuration. Therefore, a problem of a long user plane data interruption time and even a data packet loss is caused. A data packet loss problem is usually caused when a scheduling interval is greater than a PDCP timer, and the timer expires. After the timer expires, a base station actively discards a packet.

In this embodiment, the K pieces of first reference configuration information and the N RRC messages are received from the K candidate secondary nodes, to obtain the first reference configuration information of each candidate secondary node and the RRC messages of the N candidate primary secondary cells.

The second reference configuration information and the RRC messages corresponding to the N candidate primary secondary cells are delivered to the terminal, so that when the terminal determines to perform handover between two candidate primary secondary cells of a same candidate secondary node, the terminal performs PDCP recovery, to continue data transmission.

When the terminal determines to perform handover between two candidate primary secondary cells of different candidate secondary nodes, the terminal performs PDCP re-establishment, to continue data transmission.

Therefore, compared with a current method in which the PDCP release and re-addition needs to be performed because a full configuration needs to be performed when the terminal is handed over from the current primary secondary cell to the first candidate cell, in this embodiment, only PDCP recovery or PDCP re-establishment needs to be performed, to reduce overheads of RRC signaling and storage, reduce a user plane data interruption time, and avoid a data packet loss.

S204: The terminal determines the third configuration information based on the second reference configuration information and the RRC message of the first candidate primary secondary cell, and the terminal accesses the first candidate primary secondary cell based on the third configuration information.

In this step, the third configuration information includes the SCG configuration information of the first candidate primary secondary cell, and the third configuration information further includes an MCG configuration of the first candidate primary secondary cell, and may further include one or more of the execution trigger condition and the measurement configuration of the at least one candidate primary secondary cell of the first candidate primary secondary cell.

The terminal receives the first indication information from the master node, where the first indication information indicates a correspondence between the K pieces of first reference configuration information and the RRC messages of the N candidate primary secondary cells, or a correspondence between the K pieces of first reference configuration information and the N candidate primary secondary cells.

For example, that the terminal determines the third configuration information based on the second reference configuration information and the RRC message of the first candidate primary secondary cell includes:
When the terminal determines that the first candidate primary secondary cell meets a corresponding execution trigger condition, the terminal determines the third configuration information based on the first reference configuration information that is in the second reference configuration message and that corresponds to the first candidate primary secondary cell and the RRC message of the first candidate primary secondary cell.

Further, that the terminal determines the third configuration information based on the first reference configuration information that is in the second reference configuration message and that corresponds to the first candidate primary secondary cell and the RRC message of the first candidate primary secondary cell includes:
If the terminal determines that the first reference configuration information corresponding to the first candidate primary secondary cell is the same as first reference configuration information applied by the terminal, the terminal determines that the intra-station primary secondary cell change is performed; or
if the terminal determines that the first reference configuration information corresponding to the first candidate primary secondary cell is different from first reference configuration information applied by the terminal, the terminal determines that the inter-station primary secondary cell change is performed.

If the terminal determines that the first reference configuration information corresponding to the first candidate primary secondary cell is the same as first reference configuration information applied by the terminal, the terminal determines that the intra-station primary secondary cell change is performed, and performs PDCP recovery to continue data transmission.

If the terminal determines that the first reference configuration information corresponding to the first candidate primary secondary cell is different from first reference configuration information applied by the terminal, the terminal determines that the inter-station primary secondary cell change is performed, and performs PDCP re-establishment to continue data transmission.

In an example embodiment, the terminal continues to determine whether a candidate primary secondary cell meets an execution trigger condition.

When the terminal detects that one candidate primary secondary cell (a candidate primary secondary cell #1) meets a corresponding execution trigger condition, the terminal first applies first reference configuration information corresponding to the candidate primary secondary cell, then applies an RRC reconfiguration message corresponding to the candidate primary secondary cell (the candidate primary secondary cell #1), and feeds back reconfiguration complete to the MN, to indicate information about the candidate primary secondary cell (the candidate primary secondary cell #1).

The RRC reconfiguration corresponding to the candidate primary secondary cell may be a delta configuration, and the delta configuration corresponds to a reference configuration of the candidate primary secondary cell. In the second reference configuration information delivered to the terminal, the terminal finds the first reference configuration information based on the relationship that is between the RRC message of the candidate primary secondary cell and the first reference configuration information and that is indicated in step 4. Optionally, the terminal first applies the MCG configuration in the second reference configuration information, and then the terminal applies the first reference configuration information, and then applies the RRC message of the delta configuration corresponding to the candidate primary secondary cell.

The terminal performs random access to the candidate primary secondary cell (the candidate primary secondary cell #1).

A sequence of sending the RRC reconfiguration complete message and performing random access by the terminal is not limited, and is determined based on implementations of the terminal.

After the terminal successfully accesses the candidate primary secondary cell #1, the terminal continues to determine whether a candidate primary secondary cell meets an execution trigger condition.

When the terminal detects that one candidate primary secondary cell (a candidate primary secondary cell #2) meets a corresponding execution trigger condition, the terminal first applies first reference configuration information corresponding to the candidate primary secondary cell, then applies an RRC reconfiguration message corresponding to the candidate primary secondary cell (the candidate primary secondary cell #2), and feeds back reconfiguration complete to the MN, to indicate information about the candidate primary secondary cell (the candidate primary secondary cell #2).

The terminal determines that the candidate primary secondary cell #2 corresponds to the first reference configuration information, and determines whether the first reference configuration information corresponding to the candidate primary secondary cell #2 is the same as the first reference configuration information that is currently applied. If the first reference configuration information corresponding to the candidate primary secondary cell #2 is the same as the first reference configuration information that is currently applied, the first reference configuration information corresponding to the candidate primary secondary cell #2 and the first reference configuration information that is currently applied have a same SN. In other words, an intra-station candidate primary secondary cell change is performed, and the terminal only needs to perform PDCP data recovery. Otherwise, an inter-station candidate primary secondary cell change is performed, and the terminal performs PDCP re-establishment. If the terminal cannot distinguish between the intra-station candidate primary secondary cell change and the inter-station candidate primary secondary cell change, the terminal performs PDCP re-establishment. If the terminal can distinguish between the intra-station primary secondary cell change and the inter-station primary secondary cell change, a user plane data interruption time is reduced.

The terminal performs random access to the candidate primary secondary cell (the candidate primary secondary cell #2).

After the terminal successfully accesses the candidate primary secondary cell #1, if the network side delivers an SN release indication to the terminal, the terminal enters a single-connection state. In this case, that the terminal performs random access to the candidate primary secondary cell #2 is a candidate primary secondary cell addition. Otherwise, that the terminal randomly accesses the candidate primary secondary cell #2 is a candidate primary secondary cell change.

After the terminal successfully accesses the candidate primary secondary cell, the terminal continues to determine whether a candidate primary secondary cell meets an execution trigger condition until the network side indicates the terminal to release the continuous CPAC configuration.

In this step, when the terminal determines to perform handover between two candidate primary secondary cells of a same candidate secondary node, the terminal performs PDCP recovery, to continue data transmission.

When the terminal determines to perform handover between two candidate primary secondary cells of different candidate secondary nodes, the terminal performs PDCP re-establishment, to continue data transmission.

Therefore, compared with a current method in which the PDCP release and re-addition needs to be performed because a full configuration needs to be performed when the terminal is handed over from the current primary secondary cell to the first candidate cell, in this embodiment, only PDCP recovery or PDCP re-establishment needs to be performed, to reduce overheads of RRC signaling and storage, reduce a user plane data interruption time, and avoid a data packet loss.

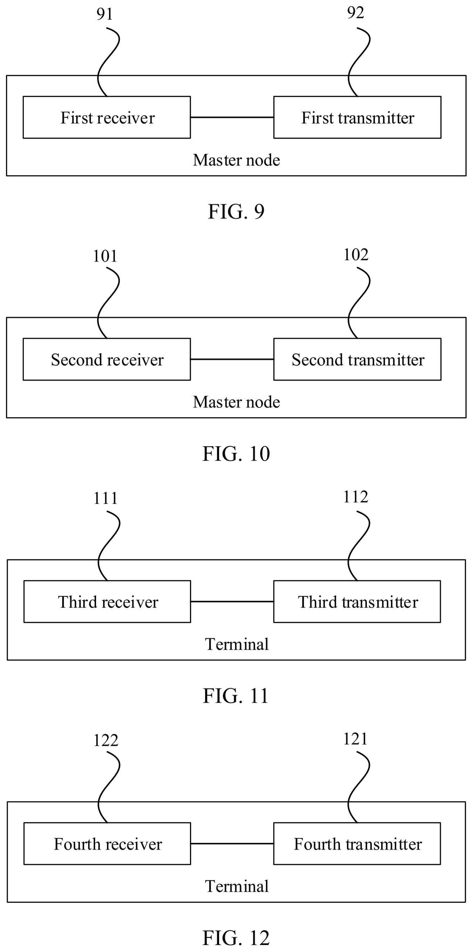

FIG. 9 is a diagram of a structure of a master node according to an embodiment of this application. As shown in FIG. 9, the master node includes: a first receiver 91 and a first transmitter 92.

The first receiver 91 is configured to determine M candidate primary secondary cells, where M is a positive integer.

The first receiver 91 is further configured to obtain first reference configuration information.

The first receiver 91 is further configured to obtain RRC messages corresponding to N candidate primary secondary cells, where N is a positive integer, the N candidate primary secondary cells are included in the M candidate primary secondary cells, an RRC message of a first candidate primary secondary cell in the N candidate primary secondary cells includes SCG configuration information of the first candidate primary secondary cell, and the SCG configuration information of the first candidate primary secondary cell is a delta configuration based on the first reference configuration information.

The first transmitter 92 is configured to deliver, to a terminal, second reference configuration information and the RRC messages corresponding to the N candidate primary secondary cells, where the second reference configuration information includes the first reference configuration information.

The first receiver 91 is further configured to receive first reference configuration information from a first candidate secondary node, where the first candidate secondary node is configured to manage one or more of the M candidate primary secondary cells.

The first receiver 91 is further configured to receive the first reference configuration information from the first candidate secondary node in response to a first message sent to the first candidate secondary node, where the first message is used to request the first reference configuration information.

The first receiver 91 is further configured to receive one or more SCG configurations from a first candidate secondary node, where the first candidate secondary node is configured to manage one or more of the M candidate primary secondary cells, and the one or more SCG configurations are full configurations, and M is a positive integer.

The first receiver 91 is further configured to determine the first reference configuration information based on the one or more SCG configurations.

The first receiver 91 is further configured to receive the one or more SCG configurations from the first candidate secondary node in response to a secondary node addition request message sent to the first candidate secondary node, where the secondary node addition request message is used to request the one or more SCG configurations.

The first receiver 91 is further configured to receive first reference configuration information from a source secondary node, where the source secondary node is a secondary node corresponding to a primary secondary cell currently accessed by the terminal.

The first receiver 91 is further configured to receive the first reference configuration information from the source secondary node in response to a second message sent to the source secondary node, where the second message is used to request the first reference configuration information.

The first receiver 91 is further configured to receive an SCG configuration from a source secondary node, where the source secondary node is a secondary node corresponding to a primary secondary cell currently accessed by the terminal, and the SCG configuration of the source secondary node is a full configuration.

The first receiver 91 is further configured to determine the first reference configuration information based on the SCG configuration from the source secondary node.

The first receiver 91 is further configured to receive the SCG configuration from the source secondary node in response to a third message sent to the source secondary node, where the third message is used to request a current SCG configuration of the terminal.

FIG. 10 is a diagram of a structure of a master node according to an embodiment of this application. As shown in FIG. 10, the master node includes a second receiver 101 and a second transmitter 102.

The second receiver 101 is configured to receive K pieces of first reference configuration information and N RRC messages from K candidate secondary nodes, where K is a positive integer, N is a positive integer, one candidate secondary node corresponds to one piece of first reference configuration information and one or more RRC messages, an RRC message of a first candidate secondary node in the K candidate secondary nodes includes SCG configuration information of a first candidate primary secondary cell, and the SCG configuration information of the first candidate primary secondary cell is a delta configuration based on first reference configuration information of the first candidate secondary node.

The second transmitter 102 is configured to deliver second reference configuration information and the RRC messages of the N candidate primary secondary cells to a terminal, where the second reference configuration information includes the K pieces of first reference configuration information.

The second receiver 101 is further configured to receive the K pieces of first reference configuration information and the N RRC messages from the K candidate secondary nodes in response to secondary node addition request information sent to L candidate secondary nodes separately, where the K candidate secondary nodes are included in the L candidate secondary nodes.

FIG. 11 is a diagram of a structure of a terminal according to an embodiment of this application. As shown in FIG. 11, the terminal includes a third receiver 111 and a third transmitter 112.

The third receiver 111 is configured to receive, from a master node, second reference configuration information and RRC messages corresponding to N candidate primary secondary cells, where N is a positive integer, an RRC message of a first candidate primary secondary cell in the N candidate primary secondary cells includes SCG configuration information of the first candidate primary secondary cell, the SCG configuration information of the first candidate primary secondary cell is a delta configuration based on first reference configuration information, and the second reference configuration information includes the first reference configuration information.

The third transmitter 112 is configured to determine third configuration information based on the second reference configuration information and the RRC message of the first candidate primary secondary cell, and the terminal accesses the first candidate primary secondary cell based on the third configuration information.

The third transmitter 112 is further configured to: when it is determined that the first candidate primary secondary cell meets a corresponding execution trigger condition, access the first candidate primary secondary cell based on the first reference configuration information and the RRC message of the first candidate primary secondary cell.

FIG. 12 is a diagram of a structure of a terminal according to an embodiment of this application. As shown in FIG. 12, the terminal includes a fourth receiver 121 and a fourth transmitter 122.

The fourth receiver 121 is configured to receive, from a master node, second reference configuration information and RRC messages of N candidate primary secondary cells, where the second reference configuration information includes K pieces of first reference configuration information, K is a positive integer, N is a positive integer, one candidate secondary node corresponds to one piece of first reference configuration information and one or more RRC messages, an RRC message of a first candidate primary secondary cell in the N candidate primary secondary cells includes SCG configuration information of the first candidate primary secondary cell, and the SCG configuration information of the first candidate primary secondary cell is a delta configuration based on first reference configuration information of the first candidate secondary node.

The fourth transmitter 122 is configured to determine third configuration information based on the second reference configuration information and the RRC message of the first candidate primary secondary cell, and the fourth transmitter 122 is further configured to access the first candidate primary secondary cell based on the third configuration information.

The fourth transmitter 122 is further configured to: when it is determined that the first candidate primary secondary cell meets a corresponding execution trigger condition, determine the third configuration information based on the first reference configuration information that is in the second reference configuration message and that corresponds to the first candidate primary secondary cell and the RRC message of the first candidate primary secondary cell.

The fourth transmitter 122 is further configured to: if it is determined that the first reference configuration information corresponding to the first candidate primary secondary cell is the same as first reference configuration information applied by the terminal, determine that an intra-station primary secondary cell change is performed.

The fourth transmitter 122 is further configured to: if it is determined that the first reference configuration information corresponding to the first candidate primary secondary cell is different from first reference configuration information applied by the terminal, determine that an inter-station primary secondary cell change is performed.

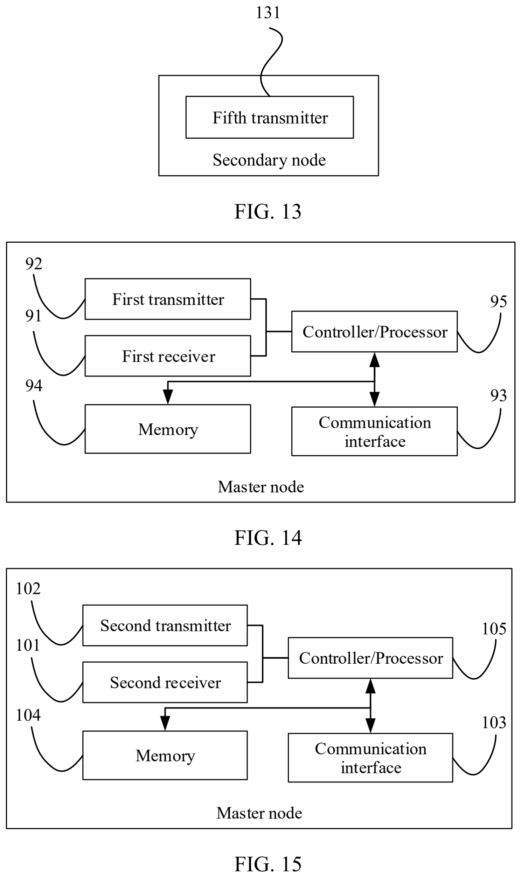

FIG. 13 is a diagram of a structure of a secondary node according to an embodiment of this application. As shown in FIG. 13, the secondary node includes:
a fifth transmitter 131.

The fifth transmitter 131 is configured to send K pieces of first reference configuration information and N RRC messages to a master node, where K is a positive integer, N is a positive integer, one candidate secondary node corresponds to one piece of first reference configuration information and one or more RRC messages, an RRC message of a first candidate secondary node in the K candidate secondary nodes includes SCG configuration information of a first candidate primary secondary cell, and the SCG configuration information of the first candidate primary secondary cell is a delta configuration based on first reference configuration information of the first candidate secondary node.

The fifth transmitter 131 is further configured to respond to secondary node addition information received from the master node.

FIG. 14 is a diagram of a structure of a master node according to an embodiment of this application. As shown in FIG. 14, the master node may be configured to perform actions or steps of the terminal device in the embodiments shown in FIG. 7A to FIG. 7D and FIG. 9. The master node includes a first receiver 91, a first transmitter 92, a communication interface 93, a memory 94, and a processor 95.

The processor 95 invokes programs to perform the operations in the foregoing method embodiments, to implement the units and modules shown in FIG. 9. The processor 95 may also be a controller, and is denoted as "controller/processor 95" in FIG. 14. The first transmitter 92 and the first receiver 91 are configured to: support the master node in receiving and sending information with the terminal, the secondary node, and the core network device in the foregoing embodiments, and support the master node in performing radio communication with the terminal, the secondary node, and the core network device in the foregoing embodiments. The processor 95 performs various functions used to communicate with the terminal, the secondary node, and the core network device.

Further, the master node may further include a memory 94, and the memory 94 is configured to store program code and data of the master node. In addition, the master node may further include the communication interface 93. The communication interface 93 is configured to support the master node in communicating with another network entity and a terminal device.

The processor 95, for example, a central processing unit (central processing unit, CPU), may be one or more integrated circuits configured to implement the foregoing methods, for example, one or more specific integrated circuits, one or more microprocessors, or one or more field programmable gate arrays. The memory 94 may be a memory, or may be a collective name of a plurality of storage elements.

FIG. 15 is a diagram of a structure of a master node according to an embodiment of this application. As shown in FIG. 15, the master node may be configured to perform actions or steps of the terminal device in the embodiments shown in FIG. 8 and FIG. 10. The master node includes a first receiver 101, a first transmitter 102, a communication interface 103, a memory 104, and a processor 105.

The processor 105 invokes programs to perform the operations in the foregoing method embodiments, to implement the units and modules shown in FIG. 10. The processor 105 may also be a controller, and is denoted as "controller/processor 105" in FIG. 14. The first transmitter 102 and the first receiver 101 are configured to: support the master node in receiving and sending information with the terminal, the secondary node, and the core network device in the foregoing embodiments, and support the master node in performing radio communication with the terminal, the secondary node, and the core network device in the foregoing embodiments. The processor 105 performs various functions used to communicate with the terminal, the secondary node, and the core network device.

Further, the master node may further include a memory 104, and the memory 104 is configured to store program code and data of the master node. In addition, the master node may further include the communication interface 103. The communication interface 103 is configured to support the master node in communicating with another network entity and a terminal device.

The processor 105, for example, a central processing unit (central processing unit, CPU), may be one or more integrated circuits configured to implement the foregoing methods, for example, one or more specific integrated circuits, one or more microprocessors, or one or more field programmable gate arrays. The memory 104 may be a memory, or may be a collective name of a plurality of storage elements.

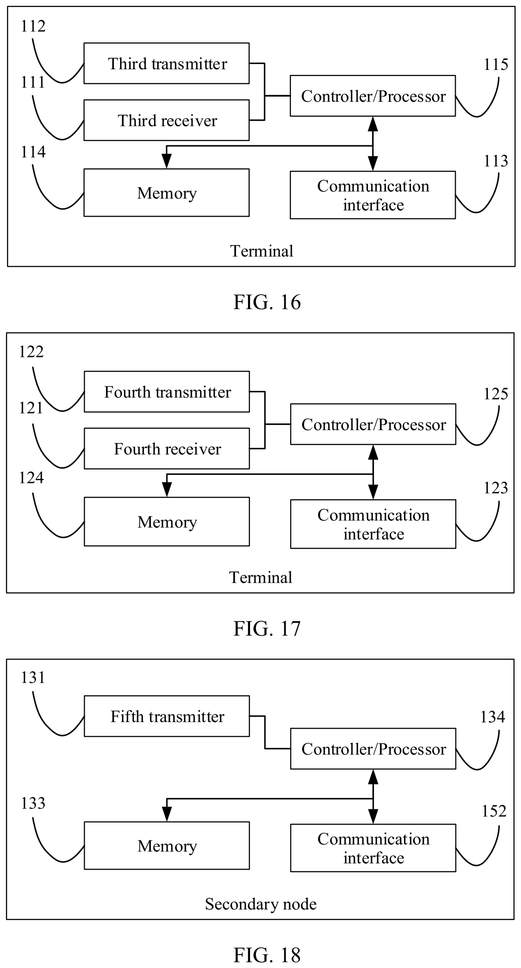

FIG. 16 is a diagram of a structure of a terminal according to an embodiment of this application. As shown in FIG. 16, the terminal may be configured to perform actions or steps of the terminal device in the embodiments shown in FIG. 7A to FIG. 7D and FIG. 9. The terminal includes a first receiver 111, a first transmitter 112, a communication interface 113, a memory 114, and a processor 115.

The processor 115 invokes programs to perform the operations in the foregoing method embodiments, to implement the units and modules shown in FIG. 9. The processor 115 may also be a controller, and is denoted as "controller/processor 115" in FIG. 16. The first transmitter 112 and the first receiver 111 are configured to: support the terminal in receiving and sending information with the master node, the secondary node, and the core network device in the foregoing embodiments, and support the terminal in performing radio communication with the master node, the secondary node, and the core network device in the foregoing embodiments. The processor 115 performs various functions used to communicate with the master node, the secondary node, and the core network device.

Further, the terminal may further include a memory 114, and the memory 114 is configured to store program code and data of the terminal. In addition, the terminal may further include the communication interface 113. The communication interface 113 is configured to support the terminal in communicating with another network entity and a terminal device.

The processor 115, for example, a central processing unit (central processing unit, CPU), may be one or more integrated circuits configured to implement the foregoing methods, for example, one or more specific integrated circuits, one or more microprocessors, or one or more field programmable gate arrays. The memory 114 may be a memory, or may be a collective name of a plurality of storage elements.

FIG. 17 is a diagram of a structure of a terminal according to an embodiment of this application. As shown in FIG. 17, the terminal may be configured to perform actions or steps of the terminal device in the embodiments shown in FIG. 8 and FIG. 10. The terminal includes a first receiver 121, a first transmitter 122, a communication interface 123, a memory 124, and a processor 125.

The processor 125 invokes programs to perform the operations in the foregoing method embodiments, to implement the units and modules shown in FIG. 10. The processor 125 may also be a controller, and is denoted as "controller/processor 125" in FIG. 14. The first transmitter 122 and the first receiver 121 are configured to: support the terminal in receiving and sending information with the terminal, the secondary node, and the core network device in the foregoing embodiments, and support the terminal in performing radio communication with the master node, the secondary node, and the core network device in the foregoing embodiments. The processor 125 performs various functions used to communicate with the master node, the secondary node, and the core network device.

Further, the terminal may further include a memory 124, and the memory 124 is configured to store program code and data of the terminal. In addition, the terminal may further include the communication interface 123. The communication interface 123 is configured to support the terminal in communicating with another network entity and a terminal device.

The processor 125, for example, a central processing unit (central processing unit, CPU), may be one or more integrated circuits configured to implement the foregoing methods, for example, one or more specific integrated circuits, one or more microprocessors, or one or more field programmable gate arrays. The memory 124 may be a memory, or may be a collective name of a plurality of storage elements.

FIG. 18 is a diagram of a structure of a secondary node according to an embodiment of this application. As shown in FIG. 18, the secondary node may be configured to perform actions or steps of the secondary node device in the embodiments shown in FIG. 8 and FIG. 10. The secondary node includes a first transmitter 131, a communication interface 132, a memory 133, and a processor 134.

The processor 134 invokes programs to perform the operations in the foregoing method embodiments, to implement the units and modules shown in FIG. 10. The processor 134 may also be a controller, and is denoted as "controller/processor 134" in FIG. 14. The first transmitter 131 and the first receiver 121 are configured to: support the secondary node in receiving and sending information with the terminal, the master node, and the core network device in the foregoing embodiments, and support the secondary node in performing radio communication with the terminal, the master node, and the core network device in the foregoing embodiments. The processor 134 performs various functions used to communicate with the terminal, the master node, and the core network device.

Further, the secondary node may further include a memory 133, and the memory 133 is configured to store program code and data of the secondary node. In addition, the secondary node may further include the communication interface 132. The communication interface 132 is configured to support the secondary node in communicating with another network entity and a secondary node device.

The processor 134, for example, a central processing unit (central processing unit, CPU), may be one or more integrated circuits configured to implement the foregoing methods, for example, one or more specific integrated circuits, one or more microprocessors, or one or more field programmable gate arrays. The memory 133 may be a memory, or may be a collective name of a plurality of storage elements.

An embodiment of this application provides a communication system. The communication system includes the network device provided in FIG. 14 and the terminal provided in FIG. 16.

An embodiment of this application provides a communication system. The communication system includes the master node provided in FIG. 15, the terminal provided in FIG. 17, and the secondary node provided in FIG. 18.

An embodiment of this application provides a computer-readable storage medium, including instructions or a program. When the instructions or the program are/is run on a computer, the computer is enabled to perform the steps of the master node, the terminal, and the secondary node in FIG. 7A to FIG. 7D.

An embodiment of this application provides a computer-readable storage medium, including instructions or a program. When the instructions or the program are/is run on a computer, the computer is enabled to perform the steps of the master node, the terminal, and the secondary node in FIG. 8.

An embodiment of this application provides a computer program product, including program code. When running the program code, a computer is configured to perform the steps of the network device in the embodiments shown in FIG. 7A to FIG. 7D and FIG. 8.

All or some of the foregoing embodiments may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, and the communication medium includes any medium that enables a computer program to be transmitted from one place to another. The storage medium may be any available medium accessible to a general-purpose or dedicated computer.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cell configuration method, wherein the method comprises:
determining, by a master node, M candidate primary secondary cells, wherein M is a positive integer;
obtaining, by the master node, first reference configuration information;
obtaining, by the master node, RRC information corresponding to N candidate primary secondary cells, wherein N is a positive integer, the N candidate primary secondary cells are comprised in the M candidate primary secondary cells, RRC information of a first candidate primary secondary cell in the N candidate primary secondary cells comprises SCG configuration information of the first candidate primary secondary cell, and the SCG configuration information of the first candidate primary secondary cell is a delta configuration based on the first reference configuration information; and
delivering, by the master node to a terminal, second reference configuration information and the RRC information corresponding to the N candidate primary secondary cells, wherein the second reference configuration information comprises the first reference configuration information.

2. The method according to claim 1, wherein obtaining, by the master node, the first reference configuration information comprises:
receiving, by the master node, the first reference configuration information from a first candidate secondary node, wherein the first candidate secondary node is configured to manage one or more of the M candidate primary secondary cells.

3. The method according to claim 2, wherein receiving, by the master node, the first reference configuration information from the first candidate secondary node comprises: in response to a first message sent to the first candidate secondary node, receiving, by the master node, the first reference configuration information from the first candidate secondary node, wherein the first message is used to request the first reference configuration information.

4. The method according to claim 1, wherein obtaining, by the master node, the first reference configuration information comprises:
receiving, by the master node, one or more SCG configurations from a first candidate secondary node, wherein the first candidate secondary node is configured to manage one or more of the M candidate primary secondary cells, and the one or more SCG configurations are full configurations; and
determining, by the master node, the first reference configuration information based on the one or more SCG configurations.

5. The method according to claim 4, wherein receiving, by the master node, the one or more SCG configurations from the first candidate secondary node comprises: in response to a secondary node addition request message sent to the first candidate secondary node, receiving, by the master node, the one or more SCG configurations from the first candidate secondary node, wherein the secondary node addition request message is used to request the one or more SCG configurations.

6. The method according to claim 1, wherein obtaining, by the master node, the first reference configuration information comprises:
receiving, by the master node, the first reference configuration information from a source secondary node, wherein the source secondary node is a secondary node corresponding to a primary secondary cell currently accessed by the terminal.

7. The method according to claim 6, wherein receiving, by the master node, the first reference configuration information from the source secondary node comprises: in response to a second message sent to the source secondary node, receiving, by the master node, the first reference configuration information from the source secondary node, wherein the second message is used to request the first reference configuration information.

8. The method according to claim 1, wherein obtaining, by the master node, the first reference configuration information comprises:
receiving, by the master node, an SCG configuration from a source secondary node, wherein the source secondary node is a secondary node corresponding to a primary secondary cell currently accessed by the terminal, and the SCG configuration of the source secondary node is a full configuration; and
determining, by the master node, the first reference configuration information based on the SCG configuration from the source secondary node.

9. The method according to claim 8, wherein receiving, by the master node, the SCG configuration from the source secondary node comprises: in response to a third message sent to the source secondary node, receiving, by the master node, the SCG configuration from the source secondary node, wherein the third message is used to request a current SCG configuration of the terminal.

10. The method according to any one of claims 1 to 9, wherein the RRC information corresponding to the N candidate primary secondary cells is RRC messages corresponding to the N candidate primary secondary cells, and the RRC information of the first candidate primary secondary cell is an RRC message of the first candidate primary secondary cell.

11. A cell configuration method, wherein the method comprises:
receiving, by a master node, K pieces of first reference configuration information and N pieces of RRC information from K candidate secondary nodes, wherein K is a positive integer, N is a positive integer, one candidate secondary node corresponds to one piece of first reference configuration information and one or more pieces of RRC information, RRC information of a first candidate secondary node in the K candidate secondary nodes comprises SCG configuration information of the first candidate primary secondary cell, and the SCG configuration information of the first candidate primary secondary cell is a delta configuration based on first reference configuration information of the first candidate secondary node; and
delivering, by the master node, second reference configuration information and RRC information of the N candidate primary secondary cells to a terminal, wherein the second reference configuration information comprises the K pieces of first reference configuration information.

12. The method according to claim 11, wherein the method comprises: delivering, by the master node, first indication information to the terminal, wherein the first indication information indicates a correspondence between the K pieces of first reference configuration information and the RRC information of the N candidate primary secondary cells or the N candidate primary secondary cells.

13. The method according to claim 11, wherein receiving, by the master node, the K pieces of first reference configuration information and the N pieces of RRC information from the K candidate secondary nodes comprises: in response to secondary node addition request information sent to L candidate secondary nodes separately, receiving, by the master node, the K pieces of first reference configuration information and the N pieces of RRC information from the K candidate secondary nodes, wherein the K candidate secondary nodes are comprised in the L candidate secondary nodes.

14. The method according to any one of claims 11 to 13, wherein the N pieces of RRC information are N RRC messages, and the RRC information of the first candidate secondary node is an RRC message of the first candidate base station.

15. A cell configuration method, wherein the method comprises:
receiving, by a terminal from a master node, second reference configuration information and RRC information corresponding to N candidate primary secondary cells, wherein N is a positive integer, RRC information of a first candidate primary secondary cell in the N candidate primary secondary cells comprises SCG configuration information of the first candidate primary secondary cell, the SCG configuration information of the first candidate primary secondary cell is a delta configuration based on first reference configuration information, and the second reference configuration information comprises the first reference configuration information; and
determining, by the terminal, third configuration information based on the second reference configuration information and the RRC information of the first candidate primary secondary cell, and accessing, by the terminal, the first candidate primary secondary cell based on the third configuration information.

16. The method according to claim 15, wherein determining, by the terminal, the third configuration information based on the second reference configuration information and the RRC information of the first candidate primary secondary cell, and accessing, by the terminal, the first candidate primary secondary cell based on the third configuration information comprises:
when the terminal determines that the first candidate primary secondary cell meets a corresponding execution trigger condition, accessing, by the terminal, the first candidate primary secondary cell based on the first reference configuration information and the RRC information of the first candidate primary secondary cell.

17. The method according to claim 15 or 16, wherein the RRC information corresponding to the N candidate primary secondary cells is RRC messages corresponding to the N candidate primary secondary cells, and the RRC information of the first candidate primary secondary cell is an RRC message of the first candidate primary secondary cell.

18. A cell configuration method, wherein the method comprises:
receiving, by a terminal from a master node, second reference configuration information and RRC information of N candidate primary secondary cells, wherein the second reference configuration information comprises K pieces of first reference configuration information, K is a positive integer, N is a positive integer, one candidate secondary node corresponds to one piece of first reference configuration information and one or more pieces of RRC information, RRC information of a first candidate primary secondary cell in the N candidate primary secondary cells comprises SCG configuration information of the first candidate primary secondary cell, and the SCG configuration information of the first candidate primary secondary cell is a delta configuration based on first reference configuration information of the first candidate secondary node; and
determining, by the terminal, third configuration information based on the second reference configuration information and the RRC information of the first candidate primary secondary cell, and accessing, by the terminal, the first candidate primary secondary cell based on the third configuration information.

19. The method according to claim 18, wherein the method comprises: receiving, by the terminal, first indication information from the master node, wherein the first indication information indicates a correspondence between the K pieces of first reference configuration information and the RRC information of the N candidate primary secondary cells, or a correspondence between the K pieces of first reference configuration information and the N candidate primary secondary cells.

20. The method according to claim 18 or 19, wherein determining, by the terminal, the third configuration information based on first reference configuration information that is in the second reference configuration information and that corresponds to the first candidate primary secondary cell and the RRC information of the first candidate primary secondary cell, and accessing, by the terminal, the first candidate primary secondary cell based on the third configuration information comprises:
when the terminal determines that the first candidate primary secondary cell meets a corresponding execution trigger condition, determining, by the terminal, the third configuration information based on the first reference configuration information that is in the second reference configuration message and that corresponds to the first candidate primary secondary cell and the RRC information of the first candidate primary secondary cell.

21. The method according to claim 20, wherein accessing, by the terminal, the first candidate primary secondary cell based on the first reference configuration information that is in the second reference configuration message and that corresponds to the first candidate primary secondary cell comprises:
if the terminal determines that the first reference configuration information corresponding to the first candidate primary secondary cell is the same as first reference configuration information applied by the terminal, determining, by the terminal, that an intra-station primary secondary cell change is performed; or
if the terminal determines that the first reference configuration information corresponding to the first candidate primary secondary cell is different from first reference configuration information applied by the terminal, determining, by the terminal, that an inter-station primary secondary cell change is performed.

22. The method according to any one of claims 18 to 21, wherein the RRC information corresponding to the N candidate primary secondary cells is RRC messages corresponding to the N candidate primary secondary cells, and the RRC information of the first candidate primary secondary cell is an RRC message of the first candidate primary secondary cell.

23. A cell configuration method, wherein the method comprises:
sending, by K candidate secondary nodes, K pieces of first reference configuration information and N pieces of RRC information to a master node, wherein K is a positive integer, N is a positive integer, one candidate secondary node corresponds to one piece of first reference configuration information and one or more pieces of RRC information, RRC information of a first candidate secondary node in the K candidate secondary nodes comprises SCG configuration information of the first candidate primary secondary cell, and the SCG configuration information of the first candidate primary secondary cell is a delta configuration based on first reference configuration information of the first candidate secondary node.

24. The method according to claim 23, wherein sending the K pieces of first reference configuration information and the N pieces of RRC information to the master node comprises: responding to secondary node addition information received from the master node.

25. The method according to claim 23 or 24, wherein the N pieces of RRC information are N RRC messages, and the RRC information of the first candidate secondary node is an RRC message of the first candidate base station.

26. A master node, comprising a first receiver and a first transmitter, wherein
the first receiver is configured to determine M candidate primary secondary cells, wherein M is a positive integer;
the first receiver is further configured to obtain first reference configuration information;
the first receiver is further configured to obtain RRC information corresponding to N candidate primary secondary cells, wherein N is a positive integer, the N candidate primary secondary cells are comprised in the M candidate primary secondary cells, RRC information of a first candidate primary secondary cell in the N candidate primary secondary cells comprises SCG configuration information of the first candidate primary secondary cell, and the SCG configuration information of the first candidate primary secondary cell is a delta configuration based on the first reference configuration information; and
the first transmitter is configured to deliver, to a terminal, second reference configuration information and the RRC information corresponding to the N candidate primary secondary cells, wherein the second reference configuration information comprises the first reference configuration information.

27. The master node according to claim 26, wherein the first receiver is further configured to receive the first reference configuration information from a first candidate secondary node, wherein the first candidate secondary node is configured to manage one or more of the M candidate primary secondary cells.

28. The master node according to claim 27, wherein the first receiver is further configured to receive the first reference configuration information from the first candidate secondary node in response to a first message sent to the first candidate secondary node, wherein the first message is used to request the first reference configuration information.

29. The master node according to claim 26, wherein the first receiver is further configured to receive one or more SCG configurations from a first candidate secondary node, wherein the first candidate secondary node is configured to manage one or more of the M candidate primary secondary cells, and the one or more SCG configurations are full configurations; and
the first receiver is further configured to determine the first reference configuration information based on the one or more SCG configurations.

30. The master node according to claim 29, wherein the first receiver is further configured to receive the one or more SCG configurations from the first candidate secondary node in response to a secondary node addition request message sent to the first candidate secondary node, wherein the secondary node addition request message is used to request the one or more SCG configurations.

31. The master node according to claim 26, wherein the first receiver is further configured to receive the first reference configuration information from a source secondary node, wherein the source secondary node is a secondary node corresponding to a primary secondary cell currently accessed by the terminal.

32. The master node according to claim 31, wherein the first receiver is further configured to receive the first reference configuration information from the source secondary node in response to a second message sent to the source secondary node, wherein the second message is used to request the first reference configuration information.

33. The master node according to claim 26, wherein the first receiver is further configured to receive an SCG configuration from a source secondary node, wherein the source secondary node is a secondary node corresponding to a primary secondary cell currently accessed by the terminal, and the SCG configuration of the source secondary node is a full configuration; and
the first receiver is further configured to determine the first reference configuration information based on the SCG configuration from the source secondary node.

34. The master node according to claim 33, wherein the first receiver is further configured to receive an SCG configuration from a source secondary node in response to a third message sent to the source secondary node, wherein the third message is used to request a current SCG configuration of the terminal.

35. The master node according to any one of claims 26 to 34, wherein the RRC information corresponding to the N candidate primary secondary cells is RRC messages corresponding to the N candidate primary secondary cells, and the RRC information of the first candidate primary secondary cell is an RRC message of the first candidate primary secondary cell.

36. A master node, comprising a second receiver and a second transmitter, wherein
the second receiver is configured to receive K pieces of first reference configuration information and N pieces of RRC information from K candidate secondary nodes, wherein K is a positive integer, N is a positive integer, one candidate secondary node corresponds to one piece of first reference configuration information and one or more pieces of RRC information, RRC information of a first candidate secondary node in the K candidate secondary nodes comprises SCG configuration information of the first candidate primary secondary cell, and the SCG configuration information of the first candidate primary secondary cell is a delta configuration based on first reference configuration information of the first candidate secondary node; and
the second transmitter is configured to deliver second reference configuration information and RRC information of the N candidate primary secondary cells to a terminal, wherein the second reference configuration information comprises the K pieces of first reference configuration information.

37. The master node according to claim 36, wherein the second receiver is further configured to receive the K pieces of first reference configuration information and the N pieces of RRC information from the K candidate secondary nodes in response to secondary node addition request information sent to L candidate secondary nodes separately, wherein the K candidate secondary nodes are comprised in the L candidate secondary nodes.

38. The master node according to claim 36 or 37, wherein the N pieces of RRC information are N RRC messages, and the RRC information of the first candidate secondary node is an RRC message of the first candidate base station.

39. A terminal, comprising a third receiver and a third transmitter, wherein
the third receiver is configured to receive, from a master node, second reference configuration information and RRC information corresponding to N candidate primary secondary cells, wherein N is a positive integer, RRC information of a first candidate primary secondary cell in the N candidate primary secondary cells comprises SCG configuration information of the first candidate primary secondary cell, the SCG configuration information of the first candidate primary secondary cell is a delta configuration based on first reference configuration information, and the second reference configuration information comprises the first reference configuration information; and
the third transmitter is configured to: determine third configuration information based on the second reference configuration information and the RRC information of the first candidate primary secondary cell, and the terminal accesses the first candidate primary secondary cell based on the third configuration information.

40. The terminal according to claim 39, wherein the third transmitter is further configured to: when it is determined that the first candidate primary secondary cell meets a corresponding execution trigger condition, access the first candidate primary secondary cell based on the first reference configuration information and the RRC information of the first candidate primary secondary cell.

41. The terminal according to claim 39 or 40, wherein the RRC information corresponding to the N candidate primary secondary cells is RRC messages corresponding to the N candidate primary secondary cells, and the RRC information of the first candidate primary secondary cell is an RRC message of the first candidate primary secondary cell.

42. A terminal, comprising a fourth receiver and a fourth transmitter, wherein
the fourth receiver is configured to receive, from a master node, second reference configuration information and RRC information of N candidate primary secondary cells, wherein the second reference configuration information comprises K pieces of first reference configuration information, K is a positive integer, N is a positive integer, one candidate secondary node corresponds to one piece of first reference configuration information and one or more pieces of RRC information, RRC information of a first candidate primary secondary cell in the N candidate primary secondary cells comprises SCG configuration information of the first candidate primary secondary cell, and the SCG configuration information of the first candidate primary secondary cell is a delta configuration based on first reference configuration information of the first candidate secondary node; and
the fourth transmitter is configured to determine third configuration information based on the second reference configuration information and the RRC information of the first candidate primary secondary cell, and the fourth transmitter is further configured to access the first candidate primary secondary cell based on the third configuration information.

43. The terminal according to claim 42, wherein the fourth transmitter is further configured to: when it is determined that the first candidate primary secondary cell meets a corresponding execution trigger condition, determine the third configuration information based on the first reference configuration information that is in the second reference configuration message and that corresponds to the first candidate primary secondary cell and the RRC information of the first candidate primary secondary cell.

44. The terminal according to claim 43, wherein the fourth transmitter is further configured to: if it is determined that the first reference configuration information corresponding to the first candidate primary secondary cell is the same as first reference configuration information applied by the terminal, determine that an intra-station primary secondary cell change is performed; and
the fourth transmitter is further configured to: if it is determined that the first reference configuration information corresponding to the first candidate primary secondary cell is different from first reference configuration information applied by the terminal, determine that an inter-station primary secondary cell change is performed.

45. The terminal according to any one of claims 42 to 44, wherein the RRC information corresponding to the N candidate primary secondary cells is RRC messages corresponding to the N candidate primary secondary cells, and the RRC information of the first candidate primary secondary cell is an RRC message of the first candidate primary secondary cell.

46. A secondary node, comprising a fifth transmitter, wherein
the fifth transmitter is configured to send K pieces of first reference configuration information and N pieces of RRC information to a master node, wherein K is a positive integer, N is a positive integer, one candidate secondary node corresponds to one piece of first reference configuration information and one or more pieces of RRC information, RRC information of a first candidate secondary node in the K candidate secondary nodes comprises SCG configuration information of the first candidate primary secondary cell, and the SCG configuration information of the first candidate primary secondary cell is a delta configuration based on first reference configuration information of the first candidate secondary node.

47. The secondary node according to claim 46, wherein the fifth transmitter is further configured to respond to secondary node addition information received from the master node.

48. The secondary node according to claim 46 or 47, wherein the N pieces of RRC information are N RRC messages, and the RRC information of the first candidate secondary node is an RRC message of the first candidate base station.

49. A computer-readable storage medium, configured to store program code, wherein the program code enables a computer to perform the method according to any one of claims 1 to 25.

50. A computer program product, comprising program code, wherein the program code enables a computer to perform the method according to any one of claims 1 to 25.
